# EUROPÄISCHE PATENTANMELDUNG

(11) **EP 3 832 228 A1**
(43) Veröffentlichungstag der Anmeldung: **09.06.2021**
(21) Anmeldenummer: 20210410.5
(22) Anmeldetag: 27.11.2020
(51) Int. Cl.: F25B 41/35

(54) **EXPANSIONSVENTIL**

(30) Priorität: 04.12.2019 DE 102019132979; 24.09.2020 DE 102020124870
(71) Anmelder: ECO Holding 1 GmbH, 97828 Marktheidenfeld (DE)
(72) Erfinder: Dehrmann, Sven, 76744 Wörth (DE); Eslava Orradre, Adrian, 70374 Stuttgart (DE); Reimann, Daniel, 73666 Baltmannsweiler (DE); Schneider, Toni, 73728 Esslingen (DE)
(74) Vertreter: K&P Patentanwaltsgesellschaft mbH

(57) **Zusammenfassung**

Die Erfindung betrifft mit einem Schrittmotor betreibbares Expansionsventil (1), das Folgendes aufweist: ein Gehäuse (4); einen Hohlschaft (7), welcher in dem Gehäuse (4) angeordnet ist; einen den Hohlschaft (7) tragenden Ventilbasiskörper (5), welcher das Gehäuse (4) abschließt; einen Rotor (6), welcher von einem Stator des Schrittmotors antreibbar ist; eine zentrale Spindel (8), welche innerhalb des Hohlschafts (7) angeordnet und von dem Rotor (6) derart antreibbar ist, dass eine Rotationsbewegung der Spindel (8) über eine Gewindeverbindung (9) in eine axiale Bewegung zum Öffnen und Schließen des Expansionsventils (1) überführbar ist; und ein Hülsenelement (21), das einen Aufnahmebereich (21a), in dem die zentrale Spindel (8), eine Druckfeder (24) und ein Kraftübertragungselement (23) zumindest bereichsweise aufgenommen sind, und eine Ventilnadel (20) aufweist, wobei der Aufnahmebereich (21a) des Hülsenelements (21) mittels einer Buchse (44) verschlossen ist, wobei die Spindel (8) aus einem ersten Material hergestellt ist und die Buchse (44) zumindest bereichsweise aus einem zweiten von dem ersten Material verschiedenen Material hergestellt ist, wobei das zweite Material eine geringere Härte als das erste Material aufweist, wobei das zweite Material ein Sintermaterial ist.

## Beschreibung

Die Erfindung betrifft ein Expansionsventil.

Expansionsventile, auch Drosselventile genannt, sind allgemein Vorrichtungen, die mittels einer lokalen Verengung eines Strömungsquerschnitts einen Druck eines durchfließenden Fluides vermindern und damit eine Volumenzunahme bzw. Expansion bewirken. Üblicherweise weisen Expansionsventile einen Mechanismus auf, der eine Rotationsbewegung in eine axiale Bewegung zum Öffnen und Schließen des Expansionsventils überführt. Für die axiale Bewegung zum Öffnen und Schließen des Expansionsventils ist eine Begrenzung bzw. eine Festlegung zweier Endpunkte mittels einer Stopperstruktur notwendig.

Derartige Expansionsventile sind im Stand der Technik hinlänglich bekannt. Beispielsweise ist aus der JP 3328530 B2 eine Stopperstruktur für ein motorisiertes Ventil bekannt. Bei dem Ventil wird ein Öffnungsgrad eines Ventilsitzes in einem Ventilhauptkörper durch Drehen eines Rotors eines Motors durch Elektrifizieren eines Stators des Motors gesteuert. Der Stator ist an einem Außenumfang eines Gehäuses befestigt. Durch einen Schraubeneffekt einer Innenschraube und einer Außenschraube wird die Drehung des Rotors in eine lineare Bewegung umgewandelt.

Die Stopperstruktur, die die beiden Endpunkte beim Öffnen und Schließen des Expansionsventils festlegen soll, weist einen Stopper, ein Eingriffsteil und einen ringförmigen Führungsstift auf.

Der Stopper ist vertikal an einer von dem Zentrum entfernten Stelle an einer Rückseite eines Deckels an einem oberen Endbereich des Gehäuses angeordnet.

Das Eingriffsteil weist einen langen schmalen Schaft auf, der sich auf einer gegenüberliegenden Seite eines Ventilschafts erstreckt, der integral mit dem Rotor ausgebildet ist. Dabei ist der Schaft in eine Führungsstrecke mit einem schraubenförmigen Mittelteil und vorstehende Bereiche an dem oberen und unteren Ende eingesetzt, wobei der obere vorstehende Bereich an einem oberen Endbereich des Schafts angebracht ist und wobei der untere vorstehende Bereich nach oben gebogen ist.

Die Stopperstruktur weist ferner einen ringförmigen Führungsstift auf, der einen Ringbereich, der ungefähr einmal um das schraubenförmige Mittelteil herumgedreht wird, und einen Arm aufweist, der sich in Außenumfangsrichtung unterhalb des Ringbereichs so erstreckt, dass ein Kontakt mit dem Stopper bewirkt werden kann, der in einer schraubenförmigen Nut der Führungsstrecke angeordnet ist.

Dabei berührt ein oberer Endbereich des Ringbereichs des Führungsstifts den vorstehenden Bereich der Führungsstrecke, wenn sich der ringförmige Führungsstift entlang der schraubenförmigen Nut der Führungsstrecke bewegt. Ferner berührt der Arm des Führungsstifts das Eingriffsteil, das an dem unteren vorstehenden Bereich ausgebildet ist, wenn sich der Führungsstift entlang der schraubenförmigen Nut der Führungsstrecke nach unten bewegt.

Insgesamt ist der oben beschriebene Aufbau des aus dem Stand der Technik bekannten Expansionsventils äußerst komplex. Diese Komplexität ist allerdings kein Einzelproblem. Vielmehr weisen sämtliche aus dem Stand der Technik bekannten Expansionsventile den Nachteil auf, dass diese zur Erfüllung ihrer Funktion einen komplizierten und aufwendigen Aufbau aufweisen. Dieser komplizierte Aufbau führt unweigerlich auch dazu, dass ein einfaches Austauschen des Expansionsventils oder von Teilen hiervon nicht möglich ist.

Ferner besteht bei den bekannten Expansionsventilen auch ein Problem dahingehend, dass diese einem hohen Verschleiß ausgesetzt sind. Das führt dazu, dass die aus dem Stand der Technik bekannten Expansionsventile relativ häufig und oftmals vollständig ausgetauscht werden müssen.

Neben einem einfacheren Aufbau, der ein einfacheres Austauschen von sowohl dem gesamten Expansionsventil als auch Teilen hiervon ermöglicht, wäre daher insgesamt auch ein verschleißärmeres Expansionsventil wünschenswert.

Ein weiterer Nachteil bekannter Expansionsventile liegt darin, dass diese in ihrer Herstellung aufwändig sind.

Der Erfindung liegt daher die Aufgabe zugrunde, ein Expansionsventil anzugeben, das die oben genannten Probleme und Nachteile des Standes der Technik ausräumt. Insbesondere ist es Aufgabe der vorliegenden Erfindung, ein Expansionsventil anzugeben, das einerseits verschleißarm und andererseits kompakt ausgebildet ist. Ferner ist es Aufgabe der vorliegenden Erfindung, ein Expansionsventil anzugeben, bei dem ein besonders einfacher Austausch möglich ist. Eine weitere Aufgabe der vorliegenden Erfindung ist es, ein Ventil anzugeben, das einen Druckausgleich zwischen verschiedenen Räumen innerhalb des Ventils trotz eines verschleißarmen, kompakten Aufbaus und einer einfachen Austauschbarkeit ermöglicht.

Ferner liegt der Erfindung die Aufgabe zugrunde, ein Verfahren zum Herstellen eines Expansionsventils anzugeben, das weniger aufwändig als die aus dem Stand der Technik bekannten Verfahren ist.

Die erfindungsgemäße Lösung besteht darin, ein mit einem Schrittmotor betreibbares Expansionsventil anzugeben, das Folgendes aufweist: Ein Gehäuse; einen Hohlschaft, welcher in dem Gehäuse angeordnet ist; einen den Hohlschaft tragenden Ventilbasiskörper, welcher das Gehäuse abschließt; einen Rotor, welcher mittels eines Stators antreibbar ist; eine zentrale Spindel, welche innerhalb des Hohlschafts angeordnet und von dem Rotor derart antreibbar ist, dass eine Rotationsbewegung der Spindel über eine Gewindeverbindung in eine axiale Bewegung zum Öffnen und Schließen des Expansionsventils überführbar ist; und einen Gewindegang aufweisenden Spiralkörper, welcher auf einer Mantelfläche des Hohlschafts angeordnet und mittels des Rotors antreibbar ist, wobei an dem Hohlschaft ein Anschlagkörper angeordnet ist, der in dem Gewindegang des Spiralkörpers bewegbar angeordnet ist und als Teil einer Spindel-Stopper-Struktur eine obere Endlage und eine untere Endlage der zentralen Spindel vorgibt.

Die zentrale Spindel ist insbesondere als Gewindespindel ausgebildet, die zusammen mit anderen Elementen (hier einem Innengewinde des Hohlschafts) dazu dient, eine Rotationsbewegung des Rotors in eine translatorische Bewegung umzuwandeln.

Hierzu ist die zentrale Spindel mit dem Rotor verbunden. Der Spiralkörper ist ein separates Element und nicht Teil des Hohlschafts. Der Spiralkörper ist ebenfalls so mit dem Rotor verbunden, dass der Rotor diesen antreiben kann.

Der Anschlagkörper ist insbesondere auf der Mantelfläche des Hohlschafts angeordnet und stößt vorzugsweise, wenn die zentrale Spindel in der unteren Endlage ist, an ein erstes (oberes) Anschlagelement, und wenn die zentrale Spindel in ihrer oberen Endlage ist, an ein zweites (unteres) Anschlagelement. Bei dem Anschlagkörper kann es sich beispielsweise um ein stabförmiges Element handeln. Ob die obere oder untere Endlage der Spindel festgelegt wird, ist von der Steigung des Spiralkörpers und der Steigung der Spindel abhängig.

Dadurch, dass der den Gewindegang aufweisende Spiralkörper (separat) mittels des Rotors antreibbar ist und der Anschlagkörper so angeordnet ist, dass er in diesem Gewindegang bewegbar ist, ist eine besonders kompakte Bauform des Expansionsventils möglich.

Gemäß einer vorteilhaften Weiterbildung der Erfindung weist der Hohlschaft an der Mantelfläche eine Längsnut auf, wobei der Anschlagkörper als Gleitring ausgebildet ist, der in dem Gewindegang des Spiralkörpers mittels der Längsnut verdrehgesichert und in Axialrichtung bewegbar angeordnet ist.

Je nach Drehrichtung wird der Gleitring axial entlang des Hohlschafts (innerhalb der Längsnut) auf oder ab bewegt.

Da sich der Gleitring innerhalb der Längsnut auf und ab bewegen kann, kann die Baugröße des Expansionsventils insgesamt verringert werden, so dass dieses noch kompakter ausgestaltet werden kann. Insbesondere wird mittels der Längsnut und des Gleitrings ein einfacher Aufbau bei großer Funktionssicherheit geboten.

Außerdem wird dadurch, dass der Gleitring in der Längsnut gesichert ist, auch das Paket aus Spiralkörper und Gleitring an der Mantelfläche des Hohlschafts gesichert. Somit fungiert die Führungsnut gemeinsam mit dem Gleitring auch als Verliersicherung.

Gemäß einer vorteilhaften Weiterbildung der Erfindung ist die Spindel-Stopper-Struktur durch Zusammenwirken des Spiralkörpers und des Gleitrings ausgebildet.

Gemäß einer vorteilhaften Weiterbildung der Erfindung weist der Gleitring einen sich radial nach innen erstreckenden Fortsatz auf, der dazu ausgebildet ist, in der Längsnut zu verlaufen und dort als Verdrehsicherung zu wirken.

Dieser sich radial nach innen erstreckende Fortsatz bietet eine einfache Möglichkeit, den Gleitring gegen Verdrehen zu sichern, so dass dieser zuverlässig axial in der Längsnut bewegbar ist.

Gemäß einer vorteilhaften Weiterbildung der Erfindung weist der Spiralkörper ein erstes sich in Axialrichtung des Spiralkörpers erstreckendes Anschlagelement und ein zweites sich in Axialrichtung des Spiralkörpers erstreckendes Anschlagelement auf.

Als Axialrichtung des Spiralkörpers wird die Richtung verstanden, die sich entlang der Achse erstreckt, um die der Spiralkörper gewickelt ist. Im eingebauten Zustand ist diese Achse zumindest im Wesentlichen konzentrisch zu der Rotationsachse des Hohlschafts und der Rotationsachse der Spindel ausgerichtet. Insbesondere erstreckt sich das erste Anschlagelement in eine Richtung entgegengesetzt zu der Erstreckungsrichtung des zweiten Spiralkörpers erstreckendes Anschlagelement auf. Dabei sind beide Richtungen allerdings Axialrichtungen des Spiralkörpers.

Gemäß einer vorteilhaften Weiterbildung der Erfindung ist bei Kontakt des ersten Anschlagelements mit dem Anschlagkörper die untere Endlage der Spindel festgelegt, wobei bei Kontakt des zweiten Anschlagelements mit dem Anschlagkörper zuzüglich des maximalen Verdrehwinkels des Spiralkörpers die obere Endlage der Spindel festgelegt ist.

Wenn der Spiralkörper ein starrer bzw. nicht drehelastischer Körper ist, ist der maximale Verdrehwinkel des Spiralkörpers Null, so dass die obere Endlage der Spindel bei Kontakt des zweiten Anschlagelements mit dem Anschlagkörper festgelegt ist.

Ist der Spiralkörper allerdings drehelastisch ausgebildet, so ist die Spindel auch nach Kontakt des zweiten Anschlagelements mit dem Anschlagkörper noch so weit bewegbar, wie es die Elastizität des Spiralkörpers zulässt. Bei Kontakt des zweiten Anschlagelements mit dem Anschlagkörper wird somit die Bewegung der Spindel nach oben abgedämpft.

Alternativ hierzu kann auch bei Kontakt des ersten Anschlagelements mit dem Anschlagkörper die obere Endlage der zentralen Spindel festgelegt sein, wobei bei Kontakt des zweiten Anschlagelements mit dem Anschlagkörper zuzüglich gegebenenfalls des maximalen Verdrehwinkels des Spiralkörpers die untere Endlage der Spindel festgelegt ist.

Ob die obere oder untere Endlage der zentralen Spindel festgelegt wird, ist von der Steigung des Spiralkörpers und der Steigung der zentralen Spindel abhängig. Insbesondere ist dies davon abhängig, ob es sich um ein rechtsdrehendes oder linksdrehendes Gewinde handelt. Nur wenn die Gewindesteigung der zentralen Spindel ungleich der des Spiralkörpers ist, ist das erste Anschlagelement auch die obere Spindelposition. Weisen die zentrale Spindel und der Spiralkörper die gleiche Steigungsrichtung auf, ist der Verfahrweg von der zentralen Spindel und dem Gleitring entgegengesetzt. Entsprechend gibt dann das erste Anschlagelement auch die untere Spindelposition vor.

Gemäß einer vorteilhaften Weiterbildung der Erfindung ist der Gleitring als zylindrische Spirale ausgebildet und weist ein oberes Ende und ein dem oberen Ende entgegengesetztes unteres Ende auf, wobei das obere Ende mit dem ersten Anschlagelement in Kontakt kommt, und wobei das untere Ende mit dem zweiten Anschlagelement in Kontakt kommt.

Da der Gleitring als zylindrische Spirale ausgebildet ist, kann ein besonders gutes Halten des Gleitrings innerhalb des Spiralkörpers erreicht werden. Außerdem ist es möglich, den Gleitring, das heißt die zylindrische Spirale, so auszubilden, dass sich das obere Ende und das untere Ende überschneiden. Das bedeutet, dass die zylindrische Spirale über einen Winkelbereich ausgebildet ist, der größer als 360 Grad ist, wobei die Überschneidung hierbei der Winkelbereich ist, der über die 360 Grad hinausgeht. Durch diese Überschneidung der Enden und die Anzahl der Windungen des Spiralkörpers kann die maximale Anzahl der möglichen Umdrehungen vorgegeben und/oder begrenzt werden.

Gemäß einer vorteilhaften Weiterbildung der Erfindung ist der Spiralkörper mittels des ersten Anschlagelements mit einem Adapterelement verbunden, um bei der Rotation des Rotors mitgedreht zu werden, wobei das Adapterelement den Rotor mit der Spindel verbindet, um die Spindel bei der Rotation des Rotors mitzudrehen.

Dabei ist das Adapterelement kraftschlüssig beispielsweise durch Pressverbindung, Schweißverbindung oder Formschluss mit der Spindel verbunden. Das Adapterelement kann beispielsweise formschlüssig mit dem Rotor verbunden sein. Hierzu ist das Adapterelement im Querschnitt betrachtet nicht rotationssymmetrisch ausgebildet. Beispielsweise kann die Außenform des Adapterelements im Querschnitt betrachtet (das heißt entlang der Rotationsachse R betrachtet) dreieckig, viereckig oder allgemein mehreckig, beispielsweise auch verzahnt, ausgebildet sein. Selbstverständlich ist die Innenform des Rotors dann im Querschnitt betrachtet komplementär zu der Form des Adapterelements ausgebildet.

Das heißt, dass das erste Anschlagelement des Spiralkörpers eine Doppelfunktion erfüllt und neben der Funktion als Anschlagelement auch als Mitnehmerelement (das heißt Verbindungselement) zum Rotor bzw. Adapter dient.

Dadurch, dass die Rotation des Rotors nicht direkt, sondern indirekt über den Adapter übertragen wird, ist es beispielsweise auch möglich, unterschiedliche Expansionsventile (mit beispielsweise unterschiedlichen Rotoren) mit möglichst vielen Gleichteilen zu produzieren.

Gemäß einer vorteilhaften Weiterbildung der Erfindung ist der Spiralkörper eine Drehfeder, die in Form einer aus Stahl hergestellten Schraubenfeder ausgebildet ist.

Bei dem Stahl handelt es sich insbesondere um einen Stahl der eine ausreichende Elastizität aufweist, um ihn zu einem Spiralkörper zu formen.

Dadurch ist die Herstellung des Spiralkörpers besonders günstig.

Gemäß einer vorteilhaften Weiterbildung der Erfindung ist der Hohlschaft aus einem Kunststoff, vorzugsweise aus Polyphenylensulfid (PPS), oder Polyetheretherketon (PEEK), oder aus Messing oder Bronze hergestellt.

Bei der Verwendung von Kunststoff wird beim Expansionsventil gegenüber der Verwendung eines metallischen Materials Gewicht eingespart. Außerdem sind die Kunststoffe PPS und PEEK Hochleistungswerkstoffe, so dass diese in einem hohen Temperaturbereich (bis zu 240 Grad) dauerhaft und kurzfristig sogar bis zu 300°C anwendbar sind. Folglich kann das Expansionsventil auch bei extremen Bedingungen eingesetzt werden, ohne dass ein Ausfall des Expansionsventils befürchtet werden muss

Gemäß einer vorteilhaften Weiterbildung der Erfindung weist das Expansionsventil ferner ein Hülsenelement auf, das einen Aufnahmebereich und eine Ventilnadel aufweist, wobei in dem Aufnahmebereich ein stempelartiger Endbereich der zentralen Spindel, eine Druckfeder und ein Kraftübertragungselement vollständig aufgenommen sind.

Da das Expansionsventil mit einem derartigen Hülsenelement ausgebildet ist, das zum einen die Funktion der Ventilnadel erfüllt und zum anderen einen Aufnahmebereich bereitstellt, kann eine besonders kompakte Ausbildung des Expansionsventils erreicht werden. Trotz der kompakten Ausführung können sämtliche Funktionen des Expansionsventils zuverlässig erfüllt werden.

Gemäß einer vorteilhaften Weiterbildung der Erfindung ist das Kraftübertragungselement so ausgebildet und angeordnet, dass es durch Kontakt mit der zentralen Spindel Axialkräfte von der zentralen Spindel über die Druckfeder auf das Hülsenelement überträgt, wobei das Kraftübertragungselement im Querschnitt betrachtet derart pilzförmig ausgebildet ist, dass Drehmomente nicht oder lediglich begrenzt von der zentralen Spindel auf das Kraftübertragungselement übertragen werden.

Da das Kraftübertragungselement pilzförmig ausgebildet ist, wird der Berührungspunkt, das heißt der Kraftübertragungspunkt, zu der zentralen Spindel klein. An dem Kraftübertragungspunkt werden dann Drehmomente nur begrenzt (über Reibung) auf das Kraftübertragungselement übertragen. Insgesamt führt auch dies zu einem besonders verschleißarmen Expansionsventil.

Gemäß einer vorteilhaften Weiterbildung der Erfindung begrenzen das Gehäuse und eine dem Gehäuse zugewandte Seite des Ventilbasiskörpers einen Gehäuse-Innenraum, wobei innerhalb des Hohlschafts ein Hohlschaft-Innenraum ausgebildet ist, wobei angrenzend an eine von dem Gehäuse abgewandte Seite des Ventilbasiskörpers in einem in einem Ventileinbauraum eingebauten Zustand des Expansionsventils ein Fluideingangsraum angeordnet ist, wobei ein erster Druckausgleichskanal zum Druckausgleich zwischen dem Fluideingangsraum und dem Gehäuse-Innenraum angeordnet ist, wobei der erste Druckausgleichskanal einen ersten Kanalbereich und einen zweiten Kanalbereich aufweist, und wobei der zweite Kanalbereich von der Längsnut ausgebildet wird.

Auch hierdurch kann eine besonders kompakte Ausbildung des Expansionsventils erfolgen. Insbesondere können Bauteile dadurch gespart werden, dass vorhandenen Bauteilen eine zweite Funktion zugewiesen wird.

So hat hier die Längsnut nicht nur die Funktion der Führung des Gleitrings, sondern übernimmt auch die Funktion eines Druckausgleichskanals. Die Längsnut erfüllt somit eine Doppelfunktion, da sie einerseits eine Führung des Gleitrings ermöglicht und zusätzlich einen Teil des zweiten Druckausgleichskanals ausbildet.

Gemäß einer vorteilhaften Weiterbildung der Erfindung ist ein zweiter Druckausgleichskanal zum Druckausgleich zwischen dem Hohlschaft-Innenraum und dem Gehäuse-Innenraum in einem Bereich einer maximalen radialen Ausdehnung der Längsnut und des Hohlschaft-Innenraums angeordnet.

Hierdurch wird auch ein sicherer Druckausgleich zwischen dem Hohlschaft-Innenraum und dem Gehäuse-Innenraum ermöglicht.

Eine weitere erfindungsgemäße Lösung besteht darin, ein mit einem Schrittmotor betreibbares Expansionsventil anzugeben, das Folgendes aufweist: ein Gehäuse; einen Hohlschaft, welcher in dem Gehäuse angeordnet ist; einen den Hohlschaft tragenden Ventilbasiskörper, welcher das Gehäuse abschließt; einen Rotor, welcher mittels eines Stators antreibbar ist; eine zentrale Spindel, welche innerhalb des Hohlschafts angeordnet und von dem Rotor derart antreibbar ist, dass eine Rotationsbewegung der Spindel über eine Gewindeverbindung in eine axiale Bewegung zum Öffnen und Schließen des Expansionsventils überführbar ist; ein Adapterelement, welches zum Übertragen eines Moments von dem Rotor auf die Spindel zwischen dem Rotor und der Spindel angeordnet ist; und einen Spiralkörper, welcher auf einer Mantelseite des Hohlschafts angeordnet und mittels des Adapterelements in eine Drehbewegung versetzbar ist, wobei der Spiralkörper ein sich axial erstreckendes erstes Anschlagelement aufweist, das in einer dezentralen Öffnung des Adapterelements angeordnet ist.

Da das Adapterelement zwischen der Spindel und dem Rotor angeordnet ist, ist der Aufbau des Expansionsventils insgesamt universeller. Das heißt, dass beispielsweise unterschiedliche Rotoren verwendet werden können. Außerdem übernimmt der Adapter eine zweite Funktion, da er den Spiralkörper antreibt, das heißt in eine Drehbewegung versetzt.

Das Adapterelement weist eine zentrale Rotationsachse R auf, wobei die dezentrale Öffnung so definiert ist, dass diese dezentral von dieser zentralen Rotationsachse R ausgebildet ist.

Gemäß einer vorteilhaften Weiterbildung der Erfindung weist das Adapterelement einen plattenförmigen Basisbereich und einen sich zentral von dem plattenförmigen Basisbereich aus axial erstreckenden Aufnahmebereich für die zentrale Spindel auf.

Der sich axial erstreckende Aufnahmebereich hat den Vorteil, dass die Bohrungstoleranz erweitert werden kann, da eine lange Führung ein geringeres mögliches Verkippen der Bauteile zueinander mit sich führt.

Die Verbindung zwischen Spindel und Adapterelement erfolgt beispielsweise nach Ausrichten an der Oberseite der Spindel. Die Verbindung kann mittels Laserschweißen erfolgen, wobei vorzugsweise mehrere Schweißpunkte gesetzt werden.

Da nur der Basisbereich plattenförmig ausgebildet ist, kann außerdem im Vergleich zu einem vollständig plattenförmig ausgebildeten Adapterelement Gewicht eingespart werden.

Gemäß einer vorteilhaften Weiterbildung der Erfindung ist eine zentrale Durchgangsöffnung entlang einer Rotationsachse R des Adapterelements dazu ausgebildet, einen oberen Bereich der Spindel aufzunehmen.

Die zentrale Durchgangsöffnung erstreckt sich also entlang der Rotationsachse R des Adapterelements. Im Querschnitt betrachtet ist die zentrale Durchgangsöffnung vorzugsweise kreisförmig, um eine besonders einfaches Ausrichten der Spindel-Stopper-Struktur bzw. des oberen Anschlags zu ermöglichen.

Allerdings muss es sich bei der zentralen Durchgangsöffnung nicht um eine kreisförmige Öffnung handeln. Vielmehr könnte die zentrale Durchgangsöffnung im Querschnitt betrachtet nicht rotationssymmetrisch ausgebildet sein. Beispielsweise kann die Durchgangsöffnung im Querschnitt betrachtet (das heißt entlang der Rotationsachse R betrachtet) dreieckig, viereckig oder allgemein mehreckig, beispielsweise auch verzahnt, ausgebildet sein.

Hiermit wäre dann eine besonders einfache Kraftübertragung von dem Adapterelement auf die Spindel bzw. genauer auf den oberen Bereich der Spindel möglich. Selbstverständlich ist der obere Bereich der Spindel im Querschnitt betrachtet komplementär zu der Form der zentralen Durchgangsöffnung ausgebildet.

Gemäß einer vorteilhaften Weiterbildung der Erfindung ist die Außenform des Adapterelements nicht rotationssymmetrisch bezüglich der Rotationsachse R ausgebildet.

Gemäß einer vorteilhaften Weiterbildung der Erfindung ist die dezentrale Öffnung in dem plattenförmigen Basisbereich angeordnet, wobei der plattenförmige Basisbereich vorzugsweise noch weitere dezentrale Öffnungen aufweist.

Da die dezentrale Öffnung in dem plattenförmigen Basisbereich des Adapterelements angeordnet ist, kann diese besonders weit entfernt von dem Zentrum (das heißt der Rotationsachse) des Adapterelements ausgebildet werden. Durch eine größere Entfernung zwischen dezentraler Öffnung und Rotationsachse R kann eine bessere Kraftübertragung ermöglicht werden (Hebelarm).

Durch das Anordnen weiterer dezentraler Öffnungen können weitere Funktionen in das Adapterelement integriert werden.

Gemäß einer vorteilhaften Weiterbildung der Erfindung sind die dezentralen Öffnungen als Langlöcher ausgebildet.

Langlöcher bringen den Vorteil mit sich, dass diese einfacher zu fertigen sind, da diese von der Seite (das heißt im rechten Winkel zu der Rotationsachse) in das Adapterelement bzw. in den plattenförmigen Basisbereich des Adapterelements eingebracht werden können.

Gemäß einer vorteilhaften Weiterbildung der Erfindung ist zumindest eine der weiteren dezentralen Öffnungen so angeordnet, dass diese einen Druck in dem Gehäuse-Innenraum oberhalb des Adapterelements und unterhalb des Adapterelements ausgleicht.

Das Adapterelement erfüllt also zusätzlich auch eine Druckausgleichs-Funktion. Da (erneut) ein Bauteil so ausgebildet ist, dass es mehrere Funktionen ausüben kann, kann die Anzahl der Bauteile insgesamt (weiter) verringert werden.

Gemäß einer vorteilhaften Weiterbildung der Erfindung weist der Spiralkörper einen Gewindegang auf, wobei der Hohlschaft an der Mantelfläche eine Längsnut aufweist, und wobei ein Gleitring in dem Gewindegang des Spiralkörpers mittels der Längsnut verdrehgesichert und in Axialrichtung bewegbar angeordnet ist.

Da sich der Gleitring innerhalb der Längsnut auf und ab bewegen kann, kann die Baugröße des Expansionsventils insgesamt verringert werden, so dass dieses kompakter ausgestaltet werden kann. Auch wird mittels der Längsnut und des Gleitrings ein einfacher Aufbau bei großer Funktionssicherheit geboten.

Da der Gleitring in der Längsnut gesichert ist, ist auch das Paket aus Spiralkörper und Gleitring an der Mantelfläche des Hohlschafts gesichert. Somit fungiert die Führungsnut gemeinsam mit dem Gleitring auch als Verliersicherung.

Gemäß einer vorteilhaften Weiterbildung der Erfindung wird durch Zusammenwirkungen des Spiralkörpers und des Gleitrings eine Spindel-Stopper-Struktur ausgebildet, die eine obere Endlage und eine untere Endlage der zentralen Spindel vorgibt.

Gemäß einer vorteilhaften Weiterbildung der Erfindung weist der Spiralkörper ein zweites sich in Axialrichtung entgegengesetzt zu dem ersten Anschlagelement erstreckendes Anschlagelement auf.

Gemäß einer vorteilhaften Weiterbildung der Erfindung ist der Gleitring als zylindrische Spirale ausgebildet und weist ein oberes Ende und ein unteres Ende auf.

Wenn der Gleitring als zylindrische Spirale ausgebildet ist, kann ein besonders gutes Halten des Gleitrings innerhalb des Spiralkörpers erreicht werden. Außerdem ist es möglich, den Gleitring, das heißt die zylindrische Spirale, so auszubilden, dass sich das obere Ende und das untere Ende desselben überschneiden. Die zylindrische Spirale ist somit über einen Vollkreis hinaus (mehr als 360 Grad) ausgebildet. Hierbei ist die Überschneidung der Bereich, der über den Vollkreis hinausgeht. Durch diese Überschneidung der Enden und die Anzahl der Windungen des Spiralkörpers kann die maximale Anzahl der möglichen Umdrehungen vorgegeben und/oder begrenzt werden.

Gemäß einer vorteilhaften Weiterbildung der Erfindung ist an einem der beiden Enden ein sich radial nach innen erstreckender Fortsatz ausgebildet.

Dieser sich radial nach innen erstreckende Fortsatz bietet eine einfache Möglichkeit, den Gleitring gegen Verdrehen zu sichern, so dass dieser zuverlässig axial in der Längsnut bewegbar ist.

Gemäß einer vorteilhaften Weiterbildung der Erfindung ist der sich radial nach innen erstreckende Fortsatz des Gleitrings dazu ausgebildet, in der Längsnut des Hohlschafts zu verlaufen und dort als Verdrehsicherung zu wirken.

Gemäß einer vorteilhaften Weiterbildung der Erfindung ist bei Kontakt des ersten Anschlagelements mit dem oberen Ende die untere Endlage der Spindel festgelegt und bei Kontakt des zweiten Anschlagelements mit dem unteren Ende zuzüglich des maximalen Verdrehwinkels des Spiralkörpers die obere Endlage der Spindel festgelegt.

Wenn der Spiralkörper ein Körper ist, der nicht in Drehrichtung vorgespannt werden kann (also starr und nicht drehelastisch), ist der maximale Verdrehwinkel des Spiralkörpers Null. Dann ist die obere Endlage der Spindel bei Kontakt des zweiten Anschlagelements mit dem Anschlagkörper festgelegt. Ist der Spiralkörper allerdings drehelastisch ausgebildet (also in Drehrichtung vorspannbar), so ist die Spindel auch nach Kontakt des zweiten Anschlagelements mit dem Anschlagkörper noch bewegbar (da sie den Spiralkörper vorspannt).

Das bedeutet, dass bei Kontakt des zweiten Anschlagelements mit dem Anschlagkörper die Drehung der Spindel nach oben abgedämpft wird.

Alternativ hierzu kann auch bei Kontakt des ersten Anschlagelements mit dem Anschlagkörper die obere Endlage der Spindel festgelegt sein, wobei bei Kontakt des zweiten Anschlagelements mit dem Anschlagkörper zuzüglich des maximalen Verdrehwinkels des Spiralkörpers die untere Endlage der Spindel festgelegt ist.

Ob die obere oder untere Endlage der Spindel festgelegt wird, ist von der Steigung des Spiralkörpers abhängig. Insbesondere ist dies davon abhängig, ob es sich um ein rechtsdrehendes oder linksdrehendes Gewinde handelt. Nur wenn die Gewindesteigung der Spindel ungleich der des Spiralkörpers ist, ist das erste Anschlagelement auch die obere Spindelposition. Weisen die Spindel und der Spiralkörper die gleiche Steigungsrichtung auf, ist der Verfahrweg von der Spindel und dem Gleitring entgegengesetzt. Entsprechend gibt dann das erste Anschlagelement auch die untere Spindelposition vor.

Gemäß einer vorteilhaften Weiterbildung der Erfindung ist der Spiralkörper eine Drehfeder, die in Form einer aus Stahl hergestellten Schraubenfeder ausgebildet ist.

Hiermit ist der Spiralkörper äußerst einfach (und günstig) herzustellen.

Die erfindungsgemäße Lösung besteht ferner darin, ein mit einem Schrittmotor betreibbares Expansionsventil anzugeben, das Folgendes aufweist: ein Gehäuse; einen Hohlschaft, welcher in dem Gehäuse angeordnet ist; einen den Hohlschaft tragenden Ventilbasiskörper, welcher das Gehäuse abschließt; einen Rotor, welcher mittels eines Stators antreibbar ist; eine zentrale Spindel, welche innerhalb des Hohlschafts angeordnet und von dem Rotor derart antreibbar ist, dass eine Rotationsbewegung der Spindel über eine Gewindeverbindung in eine axiale Bewegung zum Öffnen und Schließen des Expansionsventils überführbar ist; und ein Hülsenelement, das einen Aufnahmebereich, in dem die zentrale Spindel, eine Druckfeder und ein Kraftübertragungselement zumindest bereichsweise aufgenommen sind, und eine Ventilnadel aufweist, wobei der Aufnahmebereich des Hülsenelements mittels einer Buchse verschlossen ist, wobei die Spindel aus einem ersten Material hergestellt ist und die Buchse zumindest bereichsweise aus einem zweiten von dem ersten Material verschiedenen Material hergestellt ist, wobei das zweite Material eine geringere Härte als das erste Material aufweist, wobei das zweite Material ein Sintermaterial ist.

Da das Hülsenelement eine Ventilnadel und einen Aufnahmebereich aufweist, d.h. der Ventilnadelkörper hülsenförmig ausgebildet ist, kann eine besonders kompakte Bauform des Expansionsventils erreicht werden. Genauer liegt dies insbesondere daran, dass die für die Kraftübertragung auf die Ventilnadel nötigen Elemente in dem Aufnahmebereich platzsparend angeordnet werden können.

Im Betrieb liegen Bauteile vor, die eine Rotationsbewegung ausführen, und solche, die keine Rotationsbewegung ausführen. Insbesondere führt die Spindel eine Rotationsbewegung aus, wohingegen das Hülsenelement möglichst keine Rotation ausführt. Durch den Kontakt von rotationsausführenden Elementen mit solchen, die keine Rotation ausführen, entsteht Verschleiß an den Elementen.

Bei dem erfindungsgemäßen Expansionsventil wird dieses Problem dadurch gelöst, dass eine ausgewählte tribologische Paarung zwischen sich berührenden und sich relativ zueinander bewegenden Elementen vorliegt. Damit kann der Verschleiß gesteuert werden, so dass dieser primär an einem der beteiligten Bauteile auftritt. Zusätzlich kann dieses Bauteil optional als einfach auszuwechselnde Verschleißteile vorgesehen sein.

So kann die das Hülsenelement verschließende Buchse ein solch einfach auswechselbares Verschleißteil sein. Ist die Buchse verschlissen, kann dieses einfach ausgewechselt werden, und es muss nicht das gesamte Hülsenelement mitsamt Ventilnadel ausgewechselt werden. Somit lassen sich bei der Instandhaltung deutlich die Kosten reduzieren.

Die tribologische Paarung ist so gewählt, dass die Buchse aus einem weicheren Material, das heißt einem Material mit einer geringeren Härte, als das erste Material ausgebildet ist. Somit findet der Verschleiß hauptsächlich an der Buchse statt. Obwohl die Möglichkeit zum Austauschen der Buchse bestehen kann, ist die Buchse vorteilhaft so dimensioniert, dass diese einen Verschleiß für die Nutzungsdauer des Ventils zulässt.

Insgesamt bietet das erfindungsgemäße Expansionsventil eine kompakte Bauform, bei der konstruktiv für einen gezielten und gesteuerten Verschleiß gesorgt wird. Die Verschleißteile selbst können einfach auszutauschen sein.

Die Buchse ist insbesondere in das Hülsenelement eingepresst, das heißt mittels eine Pressverbands verbunden.

Als eine Buchse im Sinne der vorliegenden Erfindung wird ein ringförmiges oder ein hohlzylinderförmiges Element verstanden. Vorteilhafterweise ist das Hülsenelement jedoch ein hohlzylinderförmiges Element, das sich dadurch auszeichnet, dass es sich weiter in Axialrichtung (Rotationsachse) erstreckt als das ringförmige Element. Entsprechend bietet ein hohlzylinderförmiges Verschleißelement mehr verschleißbares Material als ein ringförmiges Verschleißelement.

Als Sintermaterialien werden solche verstanden, die eine Vielzahl von Poren aufweisen, die mit Schmierstoffen gefüllt sein können. Beispielsweise können 10 bis 40 Volumenprozent, vorzugsweise 15 bis 30 Volumenprozent, der Buchse dann aus Poren ausgebildet sein.

Durch die Poren ist es möglich, ein Schmiermittel direkt in die Buchse einzubringen. So wird die Reibung zwischen Buchse und Spindel verringert. Hierdurch wird besonders schnell kein Drehmoment mehr von der Spindel an die Buchse übertragen.

Die Spindel überträgt Drehmoment an die Buchse, das Hülsenelement und das Kraftübertragungselement. Die Buchse, das Hülsenelement mit Ventilnadel und das Kraftübertragungselement drehen so lange mit der gleichen Geschwindigkeit wie die Spindel bis die Ventilnadel in dem Ventilsitz in ihrer axialen Bewegung behindert wird und das vorherrschende Drehmoment kleiner ist als zwischen der Kontaktstelle Buchse zu Spindel. Daher soll die Reibung an der Kontaktstelle Buchse zu Spindel möglichst geringgehalten werden, so dass die Ventilnadel im Ventilsitz schnell gestoppt wird und stattdessen eine Relativbewegung zwischen Spindel und Buchse stattfindet.

Gemäß einer vorteilhaften Weiterbildung der Erfindung ist die Buchse ölgetränkt.

Durch die Öltränkung ist die Buchse selbstschmierend ausgebildet. Hierdurch ist die Buchse wartungsfrei und einbaufertig. Durch Adhäsionskräfte wird das Öl abgegeben und bei Stillstand durch die Kapillarwirkung wieder von der Buchse aufgenommen. Eine Zusatzschmierung ist unter normalen Betriebsbedingungen nicht notwendig. Diese kann allerdings die Lebensdauer des Expansionsventils verlängern.

Gemäß einer vorteilhaften Weiterbildung weisen mindestens 15 Volumenprozent, vorzugsweise mindestens 20 Volumenprozent und besonders bevorzugt mindestens 25 Volumenprozent der Buchse Öl auf.

Das bedeutet auch, dass mindestens 15 Volumenprozent, vorzugsweise mindestens 20 Volumenprozent und besonders bevorzugt mindestens 25 Volumenprozent der Buchse aus Poren ausgebildet sind.

Hierdurch kann ein großer Ölvorrat zur Schmierung bereitgestellt werden.

Gemäß einer vorteilhaften Weiterbildung der Erfindung sind das erste und das zweite Material Metalle oder Metalllegierungen.

Gemäß einer vorteilhaften Weiterbildung der Erfindung ist das zweite Material eine Kupferlegierung, vorzugsweise Bronze und das erste Material ein Stahl, insbesondere ein Edelstahl.

Insbesondere durch die Materialpaarung von Edelstahl und Bronze kann ein besonders gutes Verhältnis zwischen Verschleiß und Kosten erzielt werden. Einerseits darf das zweite Material nicht zu weich sein, um nicht zu schnell zu verschleißen, und andererseits nicht zu hart sein, so dass das aus dem ersten Material bestehende Element nicht beschädigt wird.

Gemäß einer vorteilhaften Weiterbildung ist das zweite Material eine Sinterbronze.

Die Sinterbronze bietet besonders gute Eigenschaften. Insbesondere ist Sinterbronze verhältnismäßig leicht. Außerdem ist Sinterbronze sehr korrosionsfest, was durch eine großzügige Schmierung aufgrund der hohen möglichen Porenanzahl noch unterstützt wird. Ferner kann die Buchse aus Sinterbronze bereits beim Urformen mit hoher Genauigkeit gefertigt werden.

Gemäß einer vorteilhaften Weiterbildung weist die Sinterbronze folgende chemische Zusammensetzung auf: 5%-18%, vorzugsweise 9-11% Zinn, 0-3%, vorzugsweise 2% Graphit, und der Rest Kupfer.

Der Großteil der Sinterbronze - oben als Rest bezeichnet - besteht somit aus Kupfer. Insbesondere sind mindestens 79 Prozent der Sinterbronze aus Kupfer ausgebildet. Durch den Anteil an Zinn nimmt die Festigkeit und erreicht zwischen 10 und 15 % Zinn ein Maximum.

Besonders bevorzugt ist auch das Kraftübertragungselement aus dem ersten Material (beispielsweise Edelstahl) ausgebildet. Ferner ist auch das Hülsenelement vorzugsweise aus dem ersten Material (das heißt Edelstahl) ausgebildet.

Gemäß einer vorteilhaften Weiterbildung der Erfindung weist das Kraftübertragungselement einen Kopfbereich und einen Schaftbereich auf, wobei das Kraftübertragungselement so angeordnet ist, dass ein Kontakt zum Übertragen von Axialkräften von der zentralen Spindel punktuell in einem zentralen Bereich des Kopfbereichs erfolgt.

Durch diese punktuelle Übertragung wird die Kontaktfläche (zum Übertragen des Drehmoments) zwischen Spindel und Kraftübertragungselement möglichst geringgehalten. Aufgrund der gering gehaltenen, das heißt kleinen, Kontaktfläche rutscht die Spindel beim Drehen durch und das Kraftübertragungselement wird nicht in Drehung versetzt. Andererseits können Axialkräfte auch über den punktuellen Kontakt zuverlässig von der Spindel auf das Kraftübertragungselement übertragen werden.

Das heißt, dass an der Kontaktfläche zwischen dem Kraftübertragungselement und der zentralen Spindel eine Drehmomentunterbrechung stattfindet. Auf den mittels des Stators angetriebenen Rotor wirkt nämlich ein Drehmoment, welches beispielweise kraftschlüssig (über den Adapter) auf die Spindel übertragen wird. Mittels der Gewindeverbindung der Spindel wird die Rotationsbewegung in eine Axialbewegung der Spindel übersetzt. Dabei ist nur diese Axialbewegung an der Ventilnadel gewünscht, das heißt eine Rotationsbewegung der Ventilnadel ist dort nicht gewünscht.

Gemäß einer vorteilhaften Weiterbildung der Erfindung ist die Druckfeder bereichsweise auf einer Mantelfläche des Schaftbereichs des Kraftübertragungselements angeordnet.

Da die Druckfeder auf der Mantelfläche des Schaftbereichs angeordnet ist, ist diese von innen mittels des Schaftbereichs geführt. Andererseits ist diese von außen mittels der Innenfläche des Aufnahmebereichs des Hülsenelements geführt. Das heißt, dass die Druckfeder zwischen Schaftbereich des Kraftübertragungselements und Aufnahmebereich des Hülsenelements sicher geführt ist.

Dabei muss die Druckfeder die beiden Elemente nicht zwangsläufig berühren. Vielmehr ist es auch denkbar, dass ein Spiel zwischen Mantelfläche des Schaftbereichs und Druckfeder sowie zwischen Druckfeder und Innenfläche des Aufnahmebereichs ausgebildet ist. Allerdings ist die Druckfeder so weit geführt, dass ein Verkippen bei der Stauchung der Feder vermieden wird.

Gemäß einer vorteilhaften Weiterbildung der Erfindung ist die Druckfeder eine zylindrische Spiralfeder.

Hiermit ist die Druckfeder in ihrer Herstellung besonders günstig und kann sicher um die Mantelfläche des Schaftbereichs angeordnet werden.

Gemäß einer vorteilhaften Weiterbildung der Erfindung ist eine axiale Länge des Schaftbereichs so lang ausgebildet, dass beim Übersteigen einer axialen Kraft, die zu einer Stauchung der Druckfeder um einen vordefinierten Federweg führt, der Schaftbereich mit einem Hülsenboden des Hülsenelements in Kontakt kommt.

Das bedeutet, dass wenn die Druckfeder um den vordefinierten Federweg gestaucht ist, eine Axialkraft direkt von dem Kraftübertragungselement auf den Hülsenboden übertragen werden kann. So kann beim Versagen des mechanischen Stopps, d.h. der Spindel-Stopper-Struktur, oder einer Überbelastung des Ventils eine Maximalhubbegrenzung erfolgen.

Somit erfüllt auch das Kraftübertragungselement mehrere Funktionen. Zunächst ermöglicht das Kraftübertragungselement eine Drehmomententkopplung des Hülsenelements von der Spindel. Ferner führt das Kraftübertragungselement bzw. dessen Schaftbereich die Druckfeder in axiale Richtungen und verhindert somit ein Einknicken bzw. allgemein eine asymmetrische Deformation der Druckfeder. Weiterhin ferner sorgt der Schaftbereich für die oben beschriebene Maximalhubbegrenzung.

Gemäß einer vorteilhaften Weiterbildung der Erfindung weist die Spindel einen stempelartigen Endbereich auf, der so ausgebildet und angeordnet ist, dass dieser zum Übertragen von Axialkräften mit dem Kraftübertragungselement in Kontakt kommt, wobei ein oberer Bereich des stempelartigen Endbereichs mit der Buchse in Reibkontakt kommt.

Das bedeutet, dass ein unterer Bereich (genauer eine Unterseite) des stempelartigen Endbereichs mit dem Kraftübertragungselement in Kontakt kommt und ein oberer Bereich des stempelartigen Endbereichs mit der Buchse in Reibkontakt kommt. Der stempelartige Endbereich ist also zwischen der Buchse und dem Kraftübertragungselement angeordnet.

Gemäß einer vorteilhaften Weiterbildung der Erfindung ist der Aufnahmebereich so ausgebildet, dass dieser die Buchse, den stempelartigen Endbereich, die Druckfeder und das Kraftübertragungselement vollständig aufnimmt.

Unten in dem Aufnahmebereich, das heißt direkt über dem Hülsenboden, ist die Druckfeder angeordnet. Über der Druckfeder ist das Kraftübertragungselement angeordnet und über dem Kraftübertragungselement ist der stempelartige Endbereich der Spindel angeordnet. Über dem stempelartigen Endbereich wiederum ist die Buchse angeordnet, wobei diese den Aufnahmebereich insgesamt verschließt.

Hierdurch wird eine besonders kompakte Ausführung des Expansionsventils erreicht.

Gemäß einer vorteilhaften Weiterbildung der Erfindung weist das Expansionsventil einen Ventilsitz auf, wobei der Ventilbasiskörper ein einstückig ausgebildeter Körper ist, der den Ventilsitz, das Hülsenelement und den Hohlschaft zumindest bereichsweise aufnimmt.

Der Ventilbasiskörper ist somit als eine Art austauschbare Ventilpatrone (Cartridge) ausgebildet. Da nur noch der Ventilbasiskörper aus einem Ventileinbauraum entfernt werden muss, wird ein vereinfachter Ventilaustausch ermöglicht. Ferner wird auch die Kompaktheit gesteigert, da eine Vielzahl von Funktionen in dem Ventilbasiskörper integriert ist.

Des Weiteren bietet ein derart einstückig ausgebildeter Ventilbasiskörper die Möglichkeit, das Ventil durch das Anpassen nur eines Bauteils (Ventilbasiskörper-Äußeres) in einem kundenspezifischen Bauraum zu integrieren. Hierdurch können Kosten gespart werden, da Gleichteile für verschiedene Expansionsventile verwendet werden können. Ferner wird die Teilevielfalt reduziert, so dass weitere Kosten eingespart werden können. Auch nimmt die Komplexität beim Zusammenbau des Expansionsventils ab.

Gemäß einer vorteilhaften Weiterbildung der Erfindung weist der Ventilbasiskörper in einem unteren Bereich einen Ventilsitz-Aufnahmebereich und in einem oberen Bereich einen Aufnahmebereich auf, der dazu ausgebildet ist, den Hohlschaft und das Hülsenelement aufzunehmen.

Der Ventilbasiskörper weist somit Aufnahmebereiche auf, die es ermöglichen, Elemente des Expansionsventils möglichst einfach in den Ventilbasiskörper zu integrieren.

Gemäß einer vorteilhaften Weiterbildung der Erfindung ist das Hülsenelement in dem Aufnahmebereich zumindest bereichsweise innerhalb des Hohlschafts angeordnet.

Durch den Aufnahmebereich verringert sich auch der Bauraum in Axialrichtung des Expansionsventils gesehen.

Gemäß einer vorteilhaften Weiterbildung der Erfindung ist das Kraftübertragungselement derart ausgebildet, dass es kein oder nur begrenztes Drehmoment von der Spindel aufnimmt.

Diese Begrenzung findet an der punktförmigen Kontaktfläche zwischen Kraftübertragungselement und zentraler Spindel statt.

Gemäß einer vorteilhaften Weiterbildung der Erfindung weist das Expansionsventil eine Spindel-Stopper-Struktur auf, die die Rotationsbewegung der Spindel zwischen einer oberen Endlage und einer unteren Endlage eingrenzt.

Gemäß einer vorteilhaften Weiterbildung der Erfindung ist die Spindel-Stopper-Struktur durch Zusammenwirken eines Spiralkörpers und eines Anschlagkörpers ausgebildet.

Die erfindungsgemäße Lösung besteht ferner darin, ein mit einem Schrittmotor betreibbares Expansionsventil anzugeben, das Folgendes aufweist: ein Gehäuse; einen Hohlschaft, welcher an dem Gehäuse angeordnet ist; einen den Hohlschaft tragenden Ventilbasiskörper, welcher das Gehäuse abschließt; einen Rotor, welcher mittels eines Stators antreibbar ist; eine zentrale Spindel, welche innerhalb des Hohlschafts angeordnet und von dem Rotor derart antreibbar ist, dass eine Rotationsbewegung der Spindel über eine Gewindeverbindung in eine axiale Bewegung zum Öffnen und Schließen des Expansionsventils überführbar ist; und ein Hülsenelement, das eine Ventilnadel aufweist, die in einen Ventilsitz pressbar ist, wobei der Ventilbasiskörper ein einstückig ausgebildeter Körper ist, der den Ventilsitz, das Hülsenelement und den Hohlschaft zumindest bereichsweise aufnimmt.

Der Ventilbasiskörper ist somit als eine Art Ventilpatrone (Cartridge) ausgebildet. Einerseits bietet dies den Vorteil, dass ein vereinfachter Ventilaustausch ermöglicht wird, da nur noch der Ventilbasiskörper aus dem Ventileinbauraum entfernt werden muss. Andererseits kann eine besonders hohe Kompaktheit erreicht werden, da eine Vielzahl von Funktionen in der Ventilpatrone, das heißt in dem Ventilbasiskörper, integriert sind.

Des Weiteren bietet ein derart einstückig ausgebildeter Ventilbasiskörper die Möglichkeit, das Ventil durch das Anpassen nur eines Bauteils in einen kundenspezifischen Bauraum zu integrieren. Es ergibt sich somit eine Vielzahl unterschiedlicher Ventile, die sich vorzugsweise nur in dem Ventilbasiskörper unterscheiden.

Dabei ist der Innenbereich der verschiedenen Ventilbasiskörper immer gleich ausgebildet, so dass die funktionalen Teile im Innenbereich in eine Vielzahl von verschiedenen Expansionsventilen einbaubar sind. Die Außenform der Ventilbasiskörper kann hingegen an den kundenspezifischen Bauraum angepasst sein, so dass sich die verschiedenen Ventilbasiskörper hier unterscheiden.

Hierdurch können insbesondere in der Fertigung Kosten gespart werden, da Gleichteile für verschiedene Expansionsventile verwendet werden können. Auch nimmt die Komplexität beim Zusammenbau des Expansionsventils ab.

Gemäß einer vorteilhaften Weiterbildung der Erfindung weist der Ventilbasiskörper in einem unteren Bereich einen Ventilsitz-Aufnahmebereich und in einem oberen Bereich einen Aufnahmebereich auf, der dazu ausgebildet ist, den Hohlschaft und das Hülsenelement aufzunehmen.

Der Ventilbasiskörper weist somit Aufnahmebereiche auf, um die funktionell nötigen Elemente des Expansionsventils möglichst einfach in den Ventilbasiskörper integrieren zu können. Durch den Aufnahmebereich verringert sich auch der Bauraum in Axialrichtung des Expansionsventils gesehen.

Gemäß einer vorteilhaften Weiterbildung der Erfindung ist das Hülsenelement in dem Aufnahmebereich zumindest bereichsweise innerhalb des Hohlschafts angeordnet.

Hierdurch kann weiterer Bauraum gespart werden. Der Aufnahmebereich kann in einer Ebene (mit der Rotationsachse R als Normale) angeordnet sein. In dem Aufnahmebereich ist zunächst radial nach innen der Hohlschaft angeordnet. Dann ist radial nach innen (das heißt innerhalb des Hohlschafts) das Hülsenelement angeordnet. Wiederum radial nach innen sind dann beispielsweise ein Teil der zentralen Spindel und/oder ein respektive das Kraftübertragungselement angeordnet.

Hierdurch ergibt sich ein außerordentlich kompakter Aufbau. Da mehrere Elemente in eine Ebene gesetzt werden, kann entsprechend die Länge in Axialrichtung verringert werden. Das heißt, dass das Expansionsventil im Vergleich zum Stand der Technik in seiner Länge gekürzt werden kann. Insbesondere in der Automobilindustrie ist der Bauraum oftmals äußerst begrenzt, so dass sich mit kürzeren Ventilen mehr Möglichkeiten für eine Anordnung ergeben.

Gemäß einer vorteilhaften Weiterbildung der Erfindung weist der Ventilbasiskörper einen Gehäusesitz auf, der radial umlaufend an einem respektive dem oberen Bereich des Ventilbasiskörpers so angeordnet und ausgebildet ist, dass dieser das Gehäuse abschließend aufnimmt.

So kann das Gehäuse sämtliche Bauteile in seinem Inneren sicher umschließen.

Gemäß einer vorteilhaften Weiterbildung der Erfindung weist der Ventilbasiskörper einen unteren Dichtungs-Aufnahmebereich und einen oberen Dichtungs-Aufnahmebereich auf.

Durch das Anordnen von zwei unterschiedlichen Dichtungs-Aufnahmebereichen kann auch bei einem einstückig ausgebildeten Ventilbasiskörper eine zuverlässige Dichtheit erreicht werden.

Gemäß einer vorteilhaften Weiterbildung der Erfindung weist der Ventilbasiskörper Einrichtungen zum Druckausgleich auf.

Das bedeutet, dass der Ventilbasiskörper so ausgebildet ist, dass in diesen Einrichtungen zum Druckausgleich (beispielsweise Druckausgleichskanäle) integriert sind. Durch die gezielte Integrierung von Druckausgleichskanälen bzw. Einrichtungen zum Druckausgleich kann der Ventilbasiskörper als einstückiges Bauteil realisiert werden, ohne die Funktionen des Expansionsventils zu beeinträchtigen.

Gemäß einer vorteilhaften Weiterbildung der Erfindung begrenzt das Gehäuse und eine dem Gehäuse zugewandte Seite des Ventilbasiskörpers einen Gehäuse-Innenraum, wobei eine erste Einrichtung zum Druckausgleich als erster Druckausgleichskanal zwischen dem Gehäuse-Innenraum und dem Fluideingangsraum angeordnet ist.

Der erste Druckausgleichskanal weist vorzugsweise einen ersten Kanalbereich, der zumindest bereichsweise in dem Ventilbasiskörper angeordnet ist, und einen zweiten Kanalbereich auf, der zumindest bereichsweise in dem Hohlschaft angeordnet ist, wobei der erste Kanalbereich und der zweite Kanalbereich über einen umfänglich umlaufenden Verbindungsbereich miteinander verbunden sind.

Im Betrieb muss ein Ungleichgewicht zwischen den wirkenden Kräften insbesondere ober- und unterhalb von den dazwischenliegenden Bauteilen nach Möglichkeit verhindert werden. Dies geschieht beispielsweise dadurch, dass ein am Eingang vorhandener Hochdruck nach oben geleitet wird. Insgesamt soll durch die Druckausgleichskanäle somit ein die Funktion des Expansionsventils störender Druckstau in einem der Räume des Expansionsventils vermieden werden.

Gemäß einer vorteilhaften Weiterbildung der Erfindung weist das Expansionsventil einen zweiten Druckausgleichskanal zum Druckausgleich zwischen einem Hohlschaft-Innenraum und dem Gehäuse-Innenraum auf, wobei der Hohlschaft-Innenraum innerhalb des Hohlschafts ausgebildet ist.

Gemäß einer vorteilhaften Weiterbildung der Erfindung weist das Hülsenelement einen Aufnahmebereich auf, in dem ein stempelartiger Endbereich der zentralen Spindel, eine Druckfeder und ein Kraftübertragungselement vollständig aufgenommen sind, wobei im Querschnitt betrachtet der Aufnahmebereich vollständig innerhalb des Ventilbasiskörpers angeordnet ist.

Hierdurch kann Bauraum gespart werden. In dem Aufnahmebereich ist zunächst radial nach innen der Hohlschaft angeordnet. Dann ist radial nach innen (das heißt innerhalb des Hohlschafts) das Hülsenelement angeordnet. Wiederum radial nach innen sind dann der stempelartige Endbereich der zentralen Spindel, die Druckfeder und das Kraftübertragungselement angeordnet.

Hierdurch ergibt sich ein außerordentlich kompakter Aufbau. Da mehrere Elemente in eine Ebene gesetzt werden, kann entsprechend die Länge in Axialrichtung verringert werden.

Gemäß einer vorteilhaften Weiterbildung der Erfindung weist das Expansionsventil einen dritten Druckausgleichskanal auf, der zwischen einem Aufnahmebereich des Hülsenelements und einem unteren Innenbereich des Ventilbasiskörpers angeordnet ist, innerhalb dessen die Ventilnadel axial bewegbar ausgebildet ist.

Der dritte Druckausgleichskanal sorgt für einen Druckausgleich zwischen dem in dem Aufnahmebereich des Hülsenelements ausgebildeten Raum und einem unteren Innenbereich des Ventilbasiskörpers. Der untere Innenbereich des Ventilbasiskörpers ist wiederum über eine Fluidbohrung mit dem Fluideingangsraum verbunden, so dass auch hier ein Druckausgleich mittels der Fluidbohrung stattfinden kann.

Somit wird auf konstruktiv einfache Art und Weise ein zuverlässiger und ausreichender Druckausgleich zwischen sämtlichen Räumen erreicht, die innerhalb und teilweise auch angrenzend an das Expansionsventil ausgebildet bzw. angeordnet sind.

Gemäß einer vorteilhaften Weiterbildung der Erfindung weist das Kraftübertragungselement einen Kopfbereich und einen Schaftbereich auf, wobei das Kraftübertragungselement so angeordnet ist, dass der Kontakt mit der zentralen Spindel punktuell in einem zentralen Bereich des Kopfbereichs erfolgt.

Durch diese punktuelle Kontaktfläche zwischen Spindel und Kraftübertragungselement, kann kein oder kaum Drehmoment übertragen werden. Daher rutscht die Spindel beim Drehen durch und das Kraftübertragungselement wird nicht in Drehung versetzt. Axialkräfte können hingegen auch mittels des punktuellen Kontakts zuverlässig von der Spindel auf das Kraftübertragungselement übertragen werden. An der Kontaktfläche zwischen Kraftübertragungselement und zentraler Spindel findet folglich eine Drehmomentunterbrechung statt.

Gemäß einer vorteilhaften Weiterbildung der Erfindung ist die Druckfeder bereichsweise auf einer Mantelfläche des Schaftbereichs des Kraftübertragungselements angeordnet.

Da die Druckfeder auf der Mantelfläche des Schaftbereichs angeordnet ist, ist diese einerseits mittels des Schaftbereichs geführt. Andererseits ist diese von außen mittels der Innenfläche des Aufnahmebereichs des Hülsenelements geführt.

Dabei muss die Druckfeder die beiden Elemente nicht berühren. Vielmehr ist es auch denkbar, dass ein Spiel zwischen Mantelfläche des Schaftbereichs und Druckfeder sowie zwischen Druckfeder und Innenfläche des Aufnahmebereichs ausgebildet ist. Allerdings ist die Druckfeder so weit geführt, dass ein Verkanten bei der Stauchung der Feder vermieden werden kann.

Gemäß einer vorteilhaften Weiterbildung der Erfindung ist die Druckfeder eine zylindrische Spiralfeder.

Als zylindrische Spiralfeder ist die Druckfeder in ihrer Herstellung besonders günstig und kann sicher um die Mantelfläche des Schaftbereichs angeordnet werden.

Gemäß einer vorteilhaften Weiterbildung der Erfindung ist die Länge des Schaftbereichs so lang ausgebildet, dass beim Übersteigen einer axialen Kraft, die zu einer Stauchung der Druckfeder um einen vordefinierten Federweg führt, der Schaftbereich mit einem Hülsenboden des Hülsenelements in Kontakt kommt.

Das bedeutet, dass wenn die Druckfeder um den vordefinierten Federweg gestaucht ist, eine Axialkraft direkt von dem Kraftübertragungselement auf den Hülsenboden übertragen werden kann. So kann beim Versagen des mechanischen Stopps, d.h. der Spindel-Stopper-Struktur, oder einer Überbelastung des Ventils eine Maximalhubbegrenzung erfolgen.

Somit erfüllt auch das Kraftübertragungselement mehrere Funktionen. Zunächst ermöglicht das Kraftübertragungselement eine Drehmomententkopplung des Hülsenelements von der Spindel. Ferner führt das Kraftübertragungselement bzw. dessen Schaftbereich die Druckfeder in axiale Richtungen und verhindert somit ein Einknicken bzw. allgemein eine asymmetrische Deformation der Druckfeder. Weiterhin ferner sorgt der Schaftbereich für die oben beschriebene Maximalhubbegrenzung.

Die erfindungsgemäße Lösung besteht ferner darin, ein mit einem Schrittmotor betreibbares Expansionsventil zum Einbauen in einen Ventileinbauraum anzugeben, das Folgendes aufweist: ein Gehäuse; einen Hohlschaft, welcher an dem Gehäuse angeordnet ist; einen den Hohlschaft tragenden Ventilbasiskörper, welcher das Gehäuse abschließt; einen Rotor, welcher mittels eines Stators antreibbar ist; und eine zentrale Spindel, welche innerhalb des Hohlschafts angeordnet und von dem Rotor derart antreibbar ist, dass eine Rotationsbewegung der Spindel über eine Gewindeverbindung in eine axiale Bewegung zum Öffnen und Schließen des Expansionsventils überführbar ist, wobei das Gehäuse und eine dem Gehäuse zugewandte Seite des Ventilbasiskörpers einen Gehäuse-Innenraum begrenzen, wobei innerhalb des Hohlschafts ein Hohlschaft-Innenraum ausgebildet ist, wobei angrenzend an eine von dem Gehäuse abgewandte Seite des Ventilbasiskörpers in einem in dem Ventileinbauraum eingebauten Zustand des Expansionsventils ein Fluideingangsraum angeordnet ist, wobei der Gehäuse-Innenraum zum Druckausgleich über einen ersten Druckausgleichskanal mit dem Fluideingangsraum verbunden ist, wobei der erste Druckausgleichskanal einen ersten Kanalbereich, der zumindest bereichsweise in dem Ventilbasiskörper angeordnet ist, und einen zweiten Kanalbereich aufweist, der zumindest bereichsweise in dem Hohlschaft angeordnet ist, wobei der erste Kanalbereich und der zweite Kanalbereich über einen umfänglich umlaufenden Verbindungsbereich miteinander verbunden sind.

Das Expansionsventil weist also eine Vielzahl von Räumen auf, die innerhalb oder angrenzend an das Expansionsventil ausgebildet sind. Im Betrieb muss ein Ungleichgewicht zwischen den wirkenden Kräften, insbesondere ober- und unterhalb dazwischenliegender Bauteile, nach Möglichkeit verhindert werden. Dies geschieht beispielsweise dadurch, dass ein am Eingang vorhandener Hochdruck nach oben geleitet wird. Insgesamt soll durch die Druckausgleichskanäle somit ein die Funktion des Expansionsventils störender Druckstau in einem der oder mehreren der Räume des Expansionsventils vermieden werden.

Im zusammengebauten Zustand des Expansionsventils ist der Hohlschaft in dem Ventilbasiskörper angeordnet (genauer gesagt in einem, respektive dem Aufnahmebereich des Ventilbasiskörpers). Der erste Kanalbereich ist zumindest bereichsweise in dem Ventilbasiskörper angeordnet und der zweite Kanalbereich ist zumindest bereichsweise in dem Hohlschaft angeordnet.

Damit ein Druckausgleich zwischen dem ersten Kanalbereich und dem zweiten Kanalbereich erfolgen kann, müssen diese in Fluidverbindung stehen. Diese Fluidverbindung erfolgt über den umfänglich umlaufenden Verbindungsbereich. Da der Verbindungsbereich als umfänglich umlaufender Verbindungsbereich ausgebildet ist, der die nötige Fluidverbindung zwischen den beiden Bereichen ausbildet, müssen beim Zusammenbau der Ventilbasiskörper und der Hohlschaft nicht mehr zueinander ausgerichtet werden. Hierdurch vereinfacht sich der Zusammenbau und es können Fehler beim Zusammenbau vermieden werden, die zu einem Ausfall des Expansionsventils führen könnten.

Gemäß einer vorteilhaften Weiterbildung der Erfindung ist der umfänglich umlaufende Verbindungsbereich ein umlaufender Freistich, welcher an einem Innenumfang eines Aufnahmebereichs des Ventilbasiskörpers angeordnet ist.

Der umlaufende Freistich ermöglicht hierbei eine zuverlässige (Fluid-)Verbindung zwischen dem ersten Kanalbereich und dem zweiten Kanalbereich.

Gemäß einer vorteilhaften Weiterbildung der vorliegenden Erfindung ist der umfänglich umlaufende Verbindungsbereich eine umlaufende Fase, welche an einem Außenumfang des Hohlschafts angeordnet ist.

Diese hat insbesondere den Vorteil, dass die Fase einfacher und damit kostengünstiger herzustellen ist als der umlaufende Freistich in dem Aufnahmebereich.

Wenn ein besonders schneller Druckausgleich gefordert ist, können auch ein umlaufender Freistich und eine umlaufende Fase angeordnet sein.

Gemäß einer vorteilhaften Weiterbildung der Erfindung ist der zweite Kanalbereich als Längsnut ausgebildet, die sich in dem Hohlschaft von einem in dem Ventilbasiskörper angeordneten Bereich bis zu einem nicht in dem Ventilbasiskörper angeordneten Bereich erstreckt.

Die Längsnut ist besonders einfach herzustellen, wobei es sich bei der Längsnut insbesondere um eine solche Längsnut handelt, in der sich der bereits beschriebene Gleitring axial bewegt. Die Längsnut erfüllt somit ebenfalls eine Doppelfunktion, da sie nicht nur als zweiter Kanalbereich ausgebildet ist, sondern auch zu der Führung des Gleitrings dient, der als Teil der Spindel-Stopper-Struktur Funktionen des Expansionsventils ausführt.

Gemäß einer vorteilhaften Weiterbildung der Erfindung weist das Expansionsventil einen zweiten Druckausgleichskanal zum Druckausgleich zwischen dem Hohlschaft-Innenraum und dem Gehäuse-Innenraum auf, der zumindest bereichsweise von dem zweiten Kanalbereich ausgebildet wird.

Mit anderen Worten bilden Bereiche des zweiten Kanalbereichs auch Bereiche des zweiten Druckausgleichskanals aus.

Gemäß einer vorteilhaften Weiterbildung der Erfindung ist der zweite Druckausgleichskanal in einem Bereich einer maximalen radialen Ausdehnung der Längsnut und des Hohlschaft-Innenraums angeordnet.

Das bedeutet, dass der zweite Druckausgleichskanal an einem Boden der Längsnut ausgebildet ist. Insbesondere handelt es sich um eine Öffnung in dem Boden der Längsnut.

Die Längsnut kann somit nicht nur als zweiter Kanalbereich, sondern auch als Teil des zweiten Druckausgleichskanals zusätzlich zum Druckausgleich zwischen dem Fluideingangsraum und dem Gehäuse-Innenraum einen Druckausgleich zwischen dem Hohlschaft-Innenraum und dem Gehäuse-Innenraum bieten.

Beim Einbringen der Längsnut in den mit dem Hohlschaft-Innenraum ausgebildeten Hohlschaft kann gleichzeitig der zweite Kanalbereich des ersten Druckausgleichskanals und der zweite Druckausgleichskanal ausgebildet werden.

Gemäß einer vorteilhaften Weiterbildung der Erfindung weist das Expansionsventil ein Adapterelement auf, das zum Übertragen eines Moments von dem Rotor auf die Spindel zwischen dem Rotor und der Spindel angeordnet ist, wobei das Adapterelement zumindest eine dezentrale Öffnung aufweist, die so angeordnet ist, dass diese einen Druck in dem Gehäuse-Innenraum oberhalb des Adapterelements und unterhalb des Adapterelements ausgleicht.

Durch die dezentrale Öffnung in dem Adapterelement kann auch der Druck innerhalb des Gehäuse-Innenraums, nämlich zwischen einem oberen Bereich (oberhalb des Adapterelements) und einem unteren Bereich (unterhalb des Adapterelements) schnell und einfach ausgeglichen werden. Hierdurch erhöht sich die Funktionszuverlässigkeit des Expansionsventils weiter.

Gemäß einer vorteilhaften Weiterbildung der Erfindung weist das Expansionsventil einen dritten Druckausgleichskanal auf, der zwischen einem Aufnahmebereich eines Hülsenelements, das eine Ventilnadel des Expansionsventils aufweist, und einem unteren Innenbereich des Ventilbasiskörpers angeordnet ist, innerhalb dessen die Ventilnadel axial bewegbar ausgebildet ist und der über eine Fluidbohrung mit dem Fluideingangsraum verbunden ist.

Der dritte Druckausgleichskanal sorgt somit für einen Druckausgleich zwischen dem in dem Aufnahmebereich des Hülsenelements ausgebildeten Raum und einem unteren Innenbereich des Ventilbasiskörpers. Der untere Innenbereich des Ventilbasiskörpers ist wiederum über eine Fluidbohrung mit dem Fluideingangsraum verbunden, so dass auch hier ein Druckausgleich über die Fluidbohrung stattfinden kann.

Somit wird auf konstruktiv einfache Weise ein zuverlässiger und ausreichender Druckausgleich zwischen sämtlichen Räumen erreicht, die innerhalb und teilweise auch angrenzend an (beispielsweise Fluideingangsraum) das Expansionsventil ausgebildet bzw. angeordnet sind.

Gemäß einer vorteilhaften Weiterbildung der Erfindung sind in dem Aufnahmebereich des Hülsenelements ein stempelartiger Endbereich der zentralen Spindel, eine Druckfeder und ein Kraftübertragungselement aufgenommen.

Hierdurch ergibt sich eine besonders kompakte Bauweise des Expansionsventils, bei der jedoch dennoch sämtliche Funktionen erfüllt werden können.

Gemäß einer vorteilhaften Weiterbildung der Erfindung ist das Kraftübertragungselement so ausgebildet und angeordnet, dass es durch Kontakt mit der zentralen Spindel Axialkräfte von der zentralen Spindel über die Druckfeder auf das Hülsenelement überträgt, wobei das Kraftübertragungselement im Querschnitt betrachtet pilzförmig ausgebildet ist.

Gemäß einer vorteilhaften Weiterbildung der Erfindung weist das Kraftübertragungselement einen Kopfbereich und einen Schaftbereich auf, wobei das Kraftübertragungselement so angeordnet ist, dass der Kontakt mit der zentralen Spindel punktuell in einem zentralen Bereich des Kopfbereichs erfolgt.

Durch diese punktuelle Kontaktfläche zwischen Spindel und Kraftübertragungselement, kann kein oder kaum Drehmoment übertragen werden. Daher rutscht die Spindel beim Drehen durch und das Kraftübertragungselement wird nicht in Drehung versetzt. Axialkräfte können hingegen auch mittels der punktuellen Kontaktfläche zuverlässig von der Spindel auf das Kraftübertragungselement übertragen werden. An der Kontaktfläche zwischen Kraftübertragungselement und zentraler Spindel findet folglich eine Drehmomentunterbrechung statt.

Gemäß einer vorteilhaften Weiterbildung der Erfindung weist das Expansionsventil einen Ventilsitz auf, wobei der Ventilbasiskörper ein einstückig ausgebildeter Körper ist, der den Ventilsitz, das Hülsenelement und den Hohlschaft zumindest bereichsweise aufnimmt.

Der Ventilbasiskörper ist somit als eine Art Patrone ausgebildet. Einerseits bietet dies den Vorteil, dass ein vereinfachter Ventilaustausch ermöglicht wird, da nur noch der Ventilbasiskörper aus dem Ventileinbauraum entfernt werden muss. Andererseits kann eine besonders hohe Kompaktheit erreicht werden, da eine Vielzahl von Funktionen in der Ventilpatrone, das heißt in dem Ventilbasiskörper, integriert sind.

Des Weiteren bietet ein derart einstückig ausgebildeter Ventilbasiskörper die Möglichkeit, das Ventil durch das Anpassen nur eines Bauteils in einem kundenspezifischen Bauraum zu integrieren. Hierdurch können insbesondere in der Fertigung Kosten gespart werden, da Gleichteile für verschiedene Expansionsventile verwendet werden können. Auch nimmt die Komplexität beim Zusammenbau des Expansionsventils ab.

Gemäß einer vorteilhaften Weiterbildung der Erfindung weist der Ventilbasiskörper einen unteren Dichtungs-Aufnahmebereich und einen oberen Dichtungs-Aufnahmebereich auf.

Durch das Anordnen von zwei unterschiedlichen Dichtungs-Aufnahmebereichen kann auch bei einem einstückig ausgebildeten Ventilbasiskörper eine zuverlässige Dichtheit erreicht werden.

Die erfindungsgemäße Lösung besteht ferner darin, ein Verfahren zum Herstellen eines Expansionsventils anzugeben, das folgende Schritte aufweist: Bereitstellen des Hohlschafts; und Einbringen der Längsnut in den Hohlschaft.

Gemäß einer vorteilhaften Weiterbildung der Erfindung wird bei dem Einbringen der Längsnut der zweite Druckausgleichskanal in dem Hohlschaft ausgebildet.

Durch das gleichzeitige Einbringen des zweiten Druckausgleichskanals wird ein sonst zusätzlich benötigter Arbeitsschritt zum gesonderten Einbringen des zweiten Druckausgleichskanals eingespart.

Weitere Vorteile der Erfindung gehen aus der Beschreibung und den Zeichnungen hervor.

Die Erfindung wird nachstehend anhand der Beschreibung von Ausführungsbeispielen unter Bezugnahme auf die beiliegenden Zeichnungen näher erläutert. Dabei ergeben sich aus der nachfolgenden Beschreibung und der Gesamtheit der Patentansprüche weitere vorteilhafte Ausführungsformen und Merkmalskombinationen der Erfindung.

Die zu der Erläuterung der Ausführungsbeispiele verwendeten Zeichnungen zeigen in:
Fig. 1 einen Längsschnitt eines erfindungsgemäßen Expansionsventils in einem in einem Ventileinbauraum eingebauten Zustand;
Fig. 2 einen detaillierten Längsschnitt eines Bewegungsmechanismus des erfindungsgemäßen Expansionsventils;
Fig. 3 eine schematische Darstellung eines Adapterelements des erfindungsgemäßen Expansionsventils;
Fig. 4 einen detaillierten Längsschnitt eines Adapterelements und eines Rotors des erfindungsgemäßen Expansionsventils;
Fig. 5 eine schematische Darstellung einer Führungsfeder des erfindungsgemäßen Expansionsventils;
Fig. 6 eine schematische Darstellung eines Gleitrings des erfindungsgemäßen Expansionsventils;
Fig. 7 eine Draufsicht auf den Gleitring aus Fig. 6;
Fig. 8 eine schematische Darstellung eines Hohlschafts des erfindungsgemäßen Expansionsventils;
Fig. 9 eine schematische Darstellung der Spindel-Stopper-Geometrie des erfindungsgemäßen Expansionsventils;
Fig. 10 einen Längsschnitt einer Kraftübertragung und Drehmomentbegrenzungseinrichtung des erfindungsgemäßen Expansionsventils;
Fig. 11 einen Längsschnitt eines Hülsenelements des erfindungsgemäßen Expansionsventils;
Fig. 12 eine schematische Darstellung eines Kraftübertragungselements des erfindungsgemäßen Expansionsventils;
Fig. 13 eine schematische Darstellung einer Druckfeder des erfindungsgemäßen Expansionsventils;
Fig. 14 einen Längsschnitt eines Ventilbasiskörpers des erfindungsgemäßen Expansionsventils;
Fig. 15 eine schematische Darstellung des Ventilbasiskörpers aus Fig. 14;
Fig. 16 ein detaillierter Längsschnitt des Ventilbasiskörpers des erfindungsgemäßen Expansionsventils; und
Fig. 17 ein detaillierter Längsschnitt eines Hohlschafts des erfindungsgemäßen Expansionsventils.

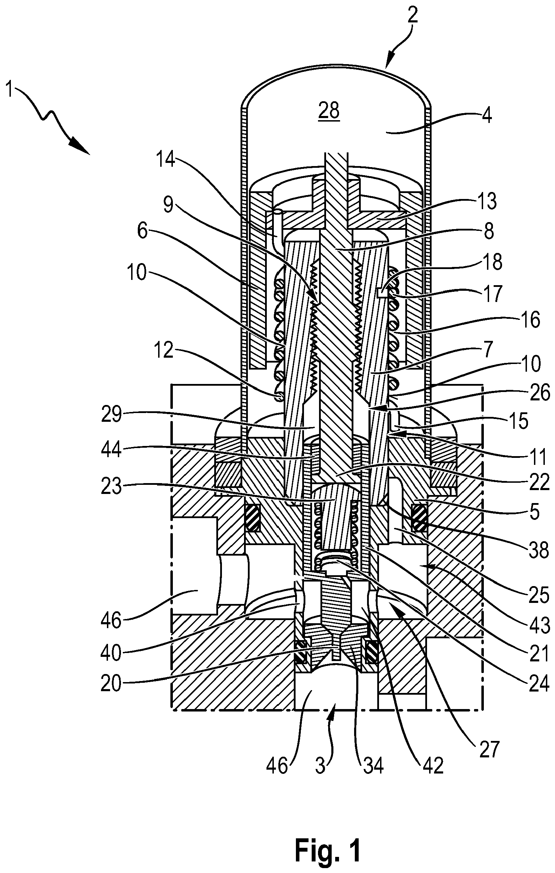

Die Fig. 1 zeigt einen Längsschnitt eines erfindungsgemäßen Expansionsventils 1 in einer beispielhaften Ausführungsform. Zu Beschreibungszwecken ist in Fig. 1 eine Oberseite 2 und eine Unterseite 3 definiert. Die Oberseite 2 und die Unterseite 3 werden auch jeweils zur Beschreibung einzelner Komponenten verwendet, deren Gesamtanordnung in Fig. 1 erkennbar ist.

Das Expansionsventil 1 weist einen Ventilbasiskörper 5 und ein Gehäuse 4 auf. In Fig. 1 ist das Expansionsventil 1 in einem Zustand dargestellt, in dem dieses in einem Ventileinbauraum 43 eingebaut ist. Als Ventileinbauraum 43 wird allgemein ein Hohlraum verstanden, in den das Expansionsventil 1 eingebaut werden soll bzw. wird.

Da der Ventilbasiskörper 5 ein einstückig ausgebildeter Körper ist, kann dieser patronenartig in den Ventileinbauraum 43 gesteckt werden. Entsprechend ist das gesamte Expansionsventil 1 einfach in den Ventileinbauraum 43 ein- und ausbaubar.

In dem in dem Ventileinbauraum 43 eingebauten Zustand des Expansionsventils 1 ist ein Fluidkanal 46 ausgebildet. Dieser erstreckt sich in Fig. 1 von einem, seitlichen Bereich (linke Seite in Fig. 1) kommend in Richtung des Ventilbasiskörpers 5 und bildet um einen unteren Bereich (das heißt zur Unterseite 3 hin) des Ventilbasiskörpers 5 herum einen Fluideingangsraum 27.

Der Fluideingangsraum 27 ist über Fluidbohrungen 40 mit einem unteren Innenbereich 42 des Ventilbasiskörpers 5 verbunden. In diesem unteren Innenbereich 42 ist auch eine Ventilnadel 20 des Expansionsventils 1 angeordnet ist.

Wird das Expansionsventil 1 geöffnet, so ist der Fluidkanal 46 von dem seitlichen Bereich des Expansionsventils 1, durch den Fluideingangsraum 27, durch die Fluidbohrung 40, durch den unteren Innenbereich 42 des Ventilbasiskörpers 5 und durch eine Ventilöffnung, die mittels der Ventilnadel 20 verschließbar ist, zu einem Bereich unter dem Expansionsventil 1 hin ausgebildet.

An einer oberen Seite (das heißt zu der Oberseite 2 hin) des Ventilbasiskörpers 5 ist das Gehäuse 4 angeordnet. Insbesondere ist das Gehäuse 4 hülsenförmig ausgebildet.

Sämtliche funktionellen Elemente bzw. Komponenten des Expansionsventils 1 sind innerhalb des Gehäuses 4 oder innerhalb des Ventilbasiskörpers 5 angeordnet. Das Gehäuse 4 ist radial von einem - hier nicht dargestellten - Schrittmotor bzw. einem Stator hiervon umgeben.

Der Ventilbasiskörper 5 schließt das Gehäuse 4 auf der Unterseite 3 ab. In dem Gehäuse 4 ist ein Rotor 6 (des Schrittmotors) angeordnet, der seine Rotation auf eine zentrale Spindel 8 überträgt.

In Figur 1 wird die Rotation von dem Rotor 6 über ein Adapterelement 13 auf die zentrale Spindel 8 übertragen. Die zentrale Spindel 8 weist ein Außengewinde auf, das mit einem Innengewinde eines Hohlschafts 7 als Gewindeverbindung 9 verbunden ist.

Durch die Gewindeverbindung 9 bewegt sich die zentrale Spindel 8 entlang einer Rotationsachse R axial nach unten (das heißt von der Oberseite 2 zu der Unterseite 3) bzw. nach oben (das heißt von der Unterseite 3 zu der Oberseite 2). Folglich kann durch diesen Bewegungsmechanismus die Rotationsbewegung des Rotors 6 in eine axiale Bewegung überführt werden.

Um den Hohlschaft 7 herum ist ein Spiralkörper 12 ausgebildet. In der in Fig. 1 gezeigten Ausbildungsform ist dieser Spiralkörper 12 als Führungsfeder 12 ausgebildet. Dabei wird für die Führungsfeder und für den Spiralkörper das Bezugszeichen 12 verwendet.

In dem Spiralkörper 12 (das heißt in einem Gewindegang 16 hiervon) verläuft ein Anschlagkörper. Hier ist der Anschlagkörper als Gleitring 17 ausgebildet.

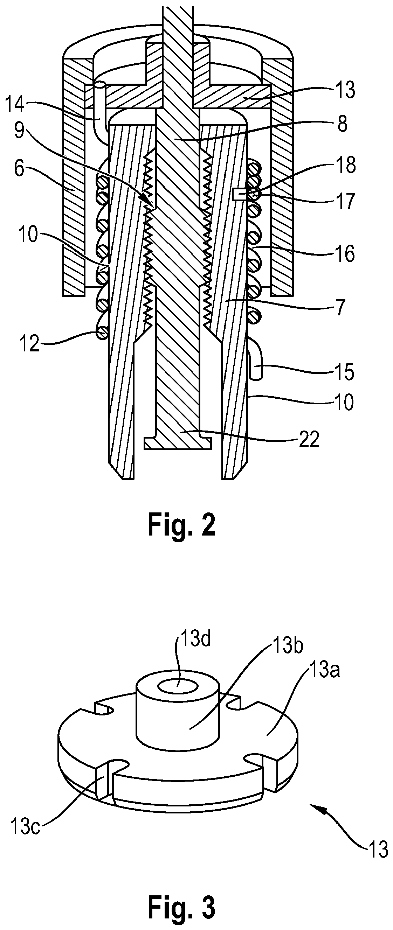

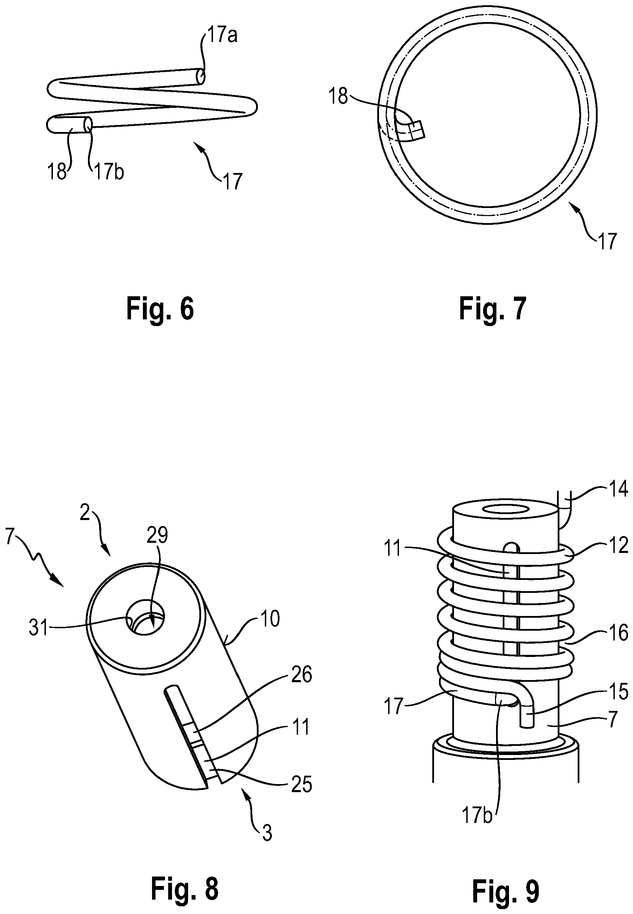

Die Führungsfeder 12 und der Gleitring 17 bilden eine Spindel-Stopper-Geometrie aus, die eine obere (axiale) Endlage und eine untere (axiale) Endlage der zentralen Spindel 8 vorgeben. Die Funktion der Spindel-Stopper-Struktur wird nochmals genauer unter Bezugnahme auf Fig. 2 und Fig. 9 erklärt.

Ein unterer Teil (das heißt zu der Unterseite 3 hin) der zentralen Spindel 8 ist in einem Hülsenelement 21 aufgenommen. Das Hülsenelement 21 selbst ist in dem Ventilbasiskörper 5 aufgenommen. Ferner ist auch ein unterer Bereich des Hohlschafts 7 in dem Ventilbasiskörper 5 aufgenommen.

Insbesondere ist das Hülsenelement 21, wie in Fig. 1 gezeigt, bereichsweise in dem Hohlschaft 7 aufgenommen, der wiederum bereichsweise in dem Ventilbasiskörper 5 aufgenommen ist. Das bedeutet, dass eine innere Umfangsfläche des Ventilbasiskörpers 5 mit einer äußeren Umfangsfläche des Hohlschafts 7 in Kontakt steht. Außerdem steht eine innere Umfangsfläche des Hohlschafts 7 mit einer äußeren Umfangsfläche des Hülsenelements 21 in Kontakt.

An einem unteren Bereich weist das Hülsenelement 21 die Ventilnadel 20 auf. Das Hülsenelement 21 ist ein einstückiger Körper, das heißt, dass die Ventilnadel 20 hülsenartig ausgebildet ist.

Die Ventilnadel 20 sitzt in einem Ventilsitz 34, wobei durch Anheben (nach oben, das heißt zur Oberseite 2 hin) aus dem Ventilsitz 34 eine Öffnung durch den Ventilsitz 34 hindurch freigegeben wird und ein Fluid durch diesen hindurchströmen kann.

In Fig. 1 ist die Ventilnadel 20 in ihrem aufgesetzten Zustand dargestellt, in dem diese dichtend auf den Ventilsitz 34 drückt.

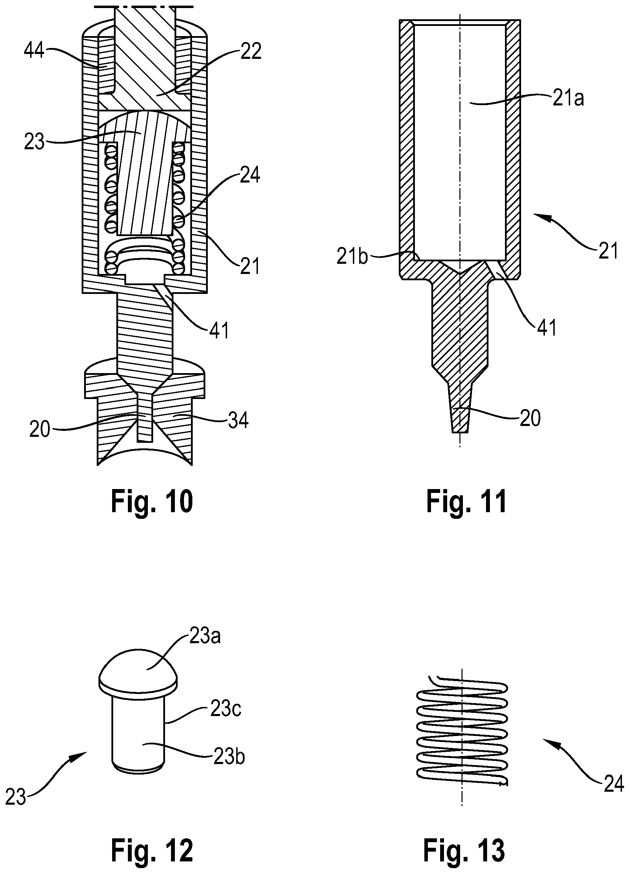

Innerhalb des Hülsenelements 21 sind Elemente angeordnet, die zur Kraftübertragung und Drehmomentbegrenzung zwischen der Spindel 8 und dem Hülsenelement 21 dienen. Diese Elemente werden genauer unter Bezugnahme auf Fig. 10 beschrieben.

Die Fig. 2 zeigt einen oberen Teil des Expansionsventils 1 genauer. Insbesondere zeigt Fig. 2 den Rotor 6, der über den Adapter 13 mit der zentralen Spindel 8 verbunden ist, die wiederum über die Gewindeverbindung 9 mit dem Hohlschaft 7 verbunden ist.

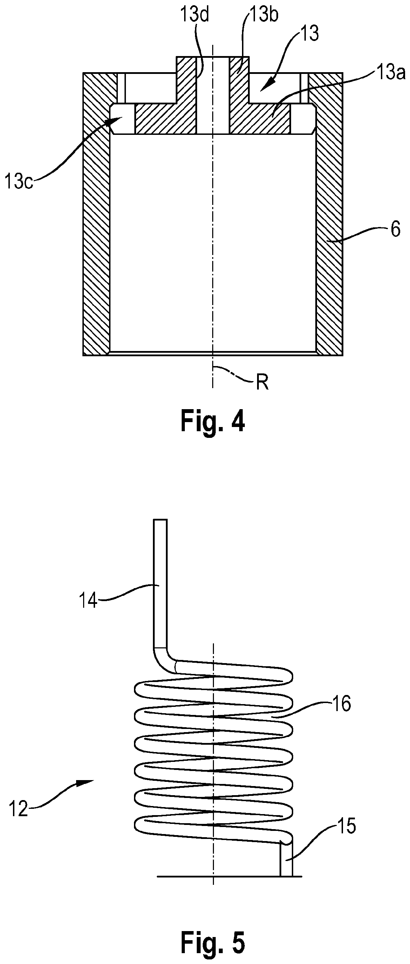

Wie in Fig. 2 zu erkennen, ist die Führungsfeder 12 an einer Mantelfläche 10 des Hohlschafts 7 angeordnet. Insbesondere handelt es sich bei der Führungsfeder 12 um die in Fig. 5 dargestellte Spiralfeder. Diese Spiralfeder weist ein erstes Anschlagelement 14 und ein zweites Anschlagelement 15 auf. Die beiden Anschlagelemente 14, 15 sind an jeweiligen Enden der als Spiralfeder ausgebildeten Führungsfeder 12 angeordnet. Insbesondere erstreckt sich das erste Anschlagelement 14 von einem oberen Ende der Spiralfeder axial nach oben, wohingegen sich das zweite Anschlagelement 15 von einem unteren Ende der Führungsfeder 12 axial nach unten erstreckt.

Wie in Fig. 2 zu erkennen, ist das erste Anschlagelement 14 mit dem Adapterelement 13 verbunden. Das bedeutet auch, dass die Führungsfeder 12 bzw. der Spiralkörper 12 sich mit dem Adapterelement 13 mitdrehen kann. Hierzu weist das Adapterelement 13 dezentrale Öffnungen 13c (siehe Fig. 3) auf, in die das erste Anschlagelement 14 eingesetzt werden kann bzw. ist.

Das zweite Anschlagelement 15 ist, wie in Fig. 1 dargestellt, in Richtung des Ventilbasiskörpers 5 ausgerichtet. Vorzugsweise kann dabei das zweite Anschlagelement 15 im Betrieb auf dem Basiskörper 5 schleifen. Alternativ hierzu könnte in dem Basiskörper 5 eine kreisförmige Nut ausgebildet sein, in der das zweite Anschlagelement 15 des Spiralkörpers 12 bzw. der Führungsfeder 12 verläuft und geführt ist.

Wie in Fig. 3 dargestellt, weist das Adapterelement 13 einen plattenförmigen Basisbereich 13a und einen Aufnahmebereich 13b für die zentrale Spindel 8 auf. Dabei erstreckt sich der Aufnahmebereich 13b zentral von dem plattenförmigen Basisbereich 13a axial in Richtung der Rotationsachse R (siehe Fig. 4).

Um die Rotationsachse R rotiert der Rotor 6, das Adapterelement 13, der Spiralkörper 12 und die zentrale Spindel 8.

Das Adapterelement 13 weist mehrere dezentrale Öffnungen 13c auf, die dezentral, also entfernt von dem Zentrum, in dem plattenförmigen Basisbereich 13a ausgebildet sind. In Fig. 3 sind vier dezentrale Öffnungen 13c in Form von Langlöchern an einem äußeren Umfang des plattenförmigen Basisbereichs 13a ausgebildet. Die Ausbildung der dezentralen Öffnungen 13c als Langlöcher bringt insbesondere fertigungsbezogene Vorteile mit sich.

In eine der dezentralen Öffnungen 13c erstreckt sich der obere Endbereich, das heißt das erste Anschlagelement 14, der Führungsfeder 12. Die restlichen dezentralen Öffnungen 13c in dem plattenförmigen Basisbereich 13a des Adapterelements 13 können beispielsweise dazu dienen, um für einen ausreichenden Druckausgleich zwischen einem Gehäuseinnenraum 28 oberhalb des Adapterelements 13 und einem Gehäuseinnenraum 28 unterhalb des Adapterelements 13 zu sorgen.

Innerhalb des Aufnahmebereichs 13b des Adapterelements 13 ist eine zentrale Durchgangsöffnung 13d ausgebildet, in die ein oberer Bereich der zentralen Spindel 8 aufnehmbar ist. Dieser obere Bereich der Spindel 8 ist im Querschnitt betrachtet komplementär zu der zentralen Durchgangsöffnung 13d ausgebildet. Im Querschnitt betrachtet bedeutet in diesem Zusammenhang, dass die beiden Bauteile entlang der Rotationsachse R betrachtet werden.

Zur Kraftübertragung wäre es denkbar, dass die beiden Elemente im Querschnitt keine Kreisform, sondern eine Form ausbilden, die nicht rotationssymmetrisch ist. So kann eine einfache Übertragung von Drehmoment von dem Adapterelement 13 auf die zentrale Spindel 8 stattfinden. Beispielsweise kann die zentrale Durchgangsöffnung 13d entsprechend mehreckig, vorzugsweise viereckig, ausgebildet sein. Insgesamt ist jedoch jede nichtrotationssymmetrische Ausbildung zum einfachen Übertragen des Drehmoments denkbar. Vorzugsweise ist der Querschnitt jedoch eine Kreisform und die Kraftübertragung erfolgt beispielsweise über eine Schweißverbindung.

Wie in Fig. 4 dargestellt, ist ein Außenumfang des plattenförmigen Basisbereichs 13a mit dem Rotor 6 verbunden. Hierdurch wird das Drehmoment des Rotors 6 auf das Adapterelement 13 übertragen. Wie ebenfalls in Fig. 4 und Fig. 2 zu erkennen, weist ein oberer Bereich des Rotors 6 einen Anschlag auf, so dass das Adapterelement 13 nicht durch den Rotor 6 hindurchrutschen kann. Dies ist insbesondere beim Zusammenbau vorteilhaft und dient zur Vermeidung von Fehlern.

Die Verbindung zwischen Rotor 6 und Adapterelement 13 kann stoffschlüssig, formschlüssig oder kraftschlüssig sein. Wesentlich ist an dieser Stelle, dass ein Drehmoment von dem Rotor 6 auf das Adapterelement 13 übertragen werden kann. Prinzipiell wäre es auch denkbar, dass das Adapterelement 13 und der Rotor 6 als einteiliges Bauteil ausgebildet sind.

In Fig. 2 ist im Schnitt der Gleitring 17 zu erkennen, der in dem Gewindegang 16 der Führungsfeder 12 verläuft.

Eine größere Darstellung des Gleitrings 17 ist in den Fig. 6 und 7 gegeben. Hier ist zu erkennen, dass der Gleitring 17 als spiralförmiges Element ausgebildet ist. Insbesondere ist der Gleitring 17 als zylindrische Spirale ausgebildet, die im eingebauten Zustand um die Rotationsachse R gewickelt ist.

Wie in Fig. 6 dargestellt, weist der Gleitring 17 ein oberes Ende 17a und ein unteres Ende 17b auf. Das obere Ende 17a und das untere Ende 17b können sich überschneiden, so dass ein spiralförmiger Körper mit mehr als einer Wicklung ausgebildet wird. Durch diese Überschneidung der Enden und die Anzahl der Windungen der Führungsfeder 12 wird die maximale Anzahl der möglichen Umdrehungen der zentralen Spindel 8 begrenzt.

An einem seiner Enden, hier am unteren Ende 17b, weist der Gleitring 17 einen sich radial nach innen erstreckenden Fortsatz 18 auf. Wie in Fig. 2 zu erkennen, verläuft dieser Fortsatz 18 in dem Hohlschaft 7. Genauer gesagt, ist der Fortsatz 18 des Gleitrings 17 in eine Längsnut 11 des Hohlschafts 7 einsetzbar bzw. bei Gebrauch eingesetzt. Diese Längsnut 11 ist besonders gut in Fig. 8 und Fig. 9 zu erkennen.

Fig. 8 zeigt den Hohlschaft 7 in einer schematischen Darstellung. Der Hohlschaft 7 ist als Hohlzylinder ausgebildet, der einen Hohlschaft-Innenraum 29 umschließt. Wie in Fig. 8 zu erkennen, ist an einem oberen Bereich des Hohlschafts 7 eine Hohlschaft-Bohrung 31 angeordnet, durch die die zentrale Spindel 8 führbar ist. An der Mantelfläche 10 ist die Längsnut 11 angeordnet, die sich axial (im eingebauten Zustand parallel zu der Rotationsachse R) erstreckt. Die Längsnut 11 ist vorzugsweise nach unten hin (das heißt zu der Unterseite 3 hin) offen ausgebildet. Alternativ kann diese allerdings, wie in Fig. 9 dargestellt, nach oben hin und nach unten hin begrenzt sein.

Im eingebauten Zustand ist der Fortsatz 18 des Gleitrings 17 in dieser Längsnut 11 angeordnet. Dadurch kann sich der Gleitring 17 nicht relativ zu dem Hohlschaft 7 drehen. Das heißt, dass mittels der Längsnut 11 und des Fortsatzes 18 eine Drehsicherung des Gleitrings 17 erfolgt. Folglich kann sich der Gleitring 17 nur axial nach oben (entlang der Längsnut 11) und axial nach unten (ebenfalls entlang der Längsnut 11) bewegen.

Wenn sich im Betrieb der Rotor 6 dreht und das Adapterelement 13 diese Drehbewegung auf die Führungsfeder 12 (über die dezentrale Öffnung 13c) überträgt, dreht sich die Führungsfeder 12 relativ zu dem Hohlschaft 7 und auch relativ zu dem in dem Hohlschaft 7 (das heißt in der Längsnut 11) axial gesicherten Gleitring 17. Durch die Rotation der Führungsfeder 12 wird der Gleitring 17 allerdings dazu angeregt, sich in dem Gewindegang 16 der Führungsfeder 12 zu bewegen. Entsprechend bewegt sich der Gleitring 17 entlang des Gewindegangs 16 nach oben und nach unten. Insbesondere in Fig. 9 ist deutlich zu erkennen, dass der spiralförmig ausgebildete Gleitring 17 in dem Gewindegang 16 der Führungsfeder 12 verläuft.

Die Spindel-Stopper-Geometrie der vorliegenden Erfindung wird nun dadurch ausgebildet, dass der Gleitring 17 sich nur so weit nach oben entlang des Gewindegangs 16 bewegen kann, bis der Gleitring 17 mit seinem oberen Ende 17a an das erste Anschlagelement 14 der Führungsfeder 12 anstößt.

Ob die obere oder untere Endlage der zentralen Spindel 8 festgelegt wird, ist von der Steigung der Führungsfeder bzw. des Spiralkörpers 12 abhängig. Wenn die Gewindesteigung der Spindel 8 ungleich der des Spiralkörpers 12 ist, dient das erste Anschlagelement 14 zum Festlegen der oberen Endlage der zentralen Spindel 8. Weisen die Spindel 8 und der Spiralkörper 12 die gleiche Steigungsrichtung auf, gibt hingegen das erste Anschlagelement 14 die untere Endlage der zentralen Spindel 8 vor. Vorzugsweise sind die Gewindesteigung der zentralen Spindel 8 und die Gewindesteigung des zentralen Spiralkörpers 12 gleich.

Sobald der Gleitring 17 an dem ersten Anschlagelement 14 anstößt, ist in diese Drehrichtung keine weitere Rotation der Führungsfeder 12 relativ zu dem Gleitring 17 möglich. Genauer gesagt wird die Rotation des Adapterelements 13 dadurch abgebremst, dass die Führungsfeder 12 blockiert, das heißt, dass die Führungsfeder 12 sich nicht weiterdrehen kann, da sie durch den Gleitring 17 gesperrt ist.

Der Brems-Kraftfluss erfolgt hierbei von der Längsnut 11 des Hohlschafts 7 auf den Fortsatz 18 des Gleitrings 17 und von dem Fortsatz 18 zu einem oberen Ende 17a des Gleitrings 17 zu dem ersten Anschlagelement 14 der Führungsfeder 12 und von dem ersten Anschlagelement 14 auf die dezentrale Öffnung 13c des Adapterelements 13. Selbstverständlich kann eine gewisse Dehnung der einzelnen Elemente vorkommen, die zu einer Dämpfung der Bremskraft führen, die durchaus gewollt sein kann. Insbesondere ist dies der Fall bei dem unteren Anschlagspunkt.

Figur 9 zeigt den Gleitring 17 an diesem unteren Anschlagspunkt. Wie in Fig. 9 zu erkennen, hat sich die Führungsfeder 12 so weit relativ zu dem Gleitring 17 (und dem Hohlschaft 7) gedreht, dass der Gleitring 17 bis an ein unteres Ende der Führungsfeder 12 gewandert ist. Dort kommt das untere Ende 17b des Gleitrings 17 mit dem zweiten Anschlagselement 15 der Führungsfeder 12 in Kontakt. Der Brems-Kraftfluss verläuft nun von der Längsnut 11 des Hohlschafts 7 auf das untere Ende 17b des Gleitrings 17 und von dem unteren Ende 17b des Gleitrings 17 auf das (untere) zweite Anschlagelement 15 der Führungsfeder 17. Von diesem zweiten Anschlagselement 15 verläuft der Brems-Kraftfluss entlang der gesamten Führungsfeder 12 bis zu dem ersten Anschlagselement 14 und dann wieder zu der dezentralen Öffnung 13c des Adapterelements 13.

Das heißt, dass im Gegensatz zu dem oberen Anschlagspunkt hier der Brems-Kraftfluss entlang der gesamten Führungsfeder 12 ausgebildet ist. Ist die Führungsfeder 12 als starrer Spiralkörper ausgebildet, tritt keine oder nur eine vernachlässigbare Dämpfung der auf die zentrale Spindel 8 wirkenden Bremskraft auf.

Je nach Steigung des Spiralkörpers ergibt sich bei Kontakt des ersten Anschlagselements 14 mit dem oberen Ende 17a des Gleitrings 17 die untere oder obere Endlage der Spindel 8 und bei Kontakt des zweiten Anschlagselements 15 mit dem unteren Ende 17b (optional zuzüglich des maximalen Verdrehwinkels des Spiralkörpers 12) die obere oder untere Endlage der Spindel 8.

In den Fig. 10 bis 13 ist der Kraftübertragungsmechanismus von der Spindel 8 auf das Hülsenelement 21 bzw. die Ventilnadel 20 dargestellt. Die zentrale Spindel 8 weist einen stempelartigen Endbereich 22 auf, der an einem unteren Ende der Spindel 8 ausgebildet ist.

Dieser stempelartige Endbereich 22 ist in dem Hülsenelement 21 aufgenommen. Genauer gesagt, ist der stempelartige Endbereich 22 in einem Aufnahmebereich 21a des Hülsenelements 21 aufgenommen. Wie in Fig. 10 dargestellt, ist ferner eine Druckfeder 24 und ein Kraftübertragungselement 23 in dem Aufnahmebereich 21a angeordnet.

Die Druckfeder 24, die in einer vergrößerten Ansicht in Fig. 13 dargestellt ist, ist mit einem Hülsenboden 21b des Hülsenelements 21 in Kontakt. Bei der Druckfeder 24 handelt es sich um eine zylindrische Spiralfeder, die mit einem unteren Bereich auf dem Hülsenboden 21b des Hülsenelements 21 aufliegt.

Wie in Fig. 12 dargestellt, weist das Kraftübertragungselement 23 einen Kopfbereich 23a und einen Schaftbereich 23b auf. Der Schaftbereich 23b weist wiederum eine Mantelfläche 23c auf.

Der Schaftbereich 23b ist innerhalb der Druckfeder 24 anordenbar. Mit anderen Worten ist die Druckfeder 24 nach innen durch die Mantelfläche 23c des Schaftbereichs 23b gestützt. Das Kraftübertragungselement 23 dient somit auch als Führungselement für die Druckfeder 24, wobei ein Umknicken der Druckfeder 24 ferner auch durch die Innenumfangsfläche des Aufnahmebereichs 21a verhindert wird. Insgesamt ist die Druckfeder 24 somit durch den Aufnahmebereich 21a und den Aufnahmebereich 21a gestützt.

Wie in Fig. 12 zu erkennen, weist das Kraftübertragungselement 23 insgesamt eine Pilzform auf. Das bedeutet, dass der Kopfbereich 23a teilkugelförmig, beispielsweise halbkugelförmig ausgebildet ist, und einen Außenumfang aufweist, der größer ist als der Außenumfang des Schaftbereichs 23b. Mit anderen Worten ist der Kopfbereich 23a pilzkopfförmig und der Schaftbereich 23b pilzstilförmig ausgebildet.

Da der Kopfbereich 23a breiter ausgebildet ist, ist ein Anstoßbereich zwischen Kraftübertragungselement 23 und Druckfeder 24 ausgebildet. Das heißt, dass ein oberer Bereich der Druckfeder 24 mit einem unteren Bereich des Kopfbereichs 23a zum Anliegen kommen kann.

Die Pilzkopfform des Kopfbereichs 23a hat allerdings ferner auch den Vorteil, dass der Kontaktbereich zu dem stempelartigen Endbereich 22 im Wesentlichen punktförmig ist. Über diesen punktförmigen Kontaktbereich kann eine Axialkraft (das heißt von oben (2) nach unten (3) oder von unten (3) nach oben (2)) gut übertragen werden, wohingegen ein Drehmoment nur sehr schlecht übertragen wird. Somit wird von dem stempelartigen Endbereich 22 kein wesentliches Drehmoment auf das Kraftübertragungselement 23 übertragen. Daher kann das Kraftübertragungselement 23 als eine Art Drehmomentbegrenzungseinrichtung dienen.

Wenn von dem Rotor 6 über das Adapterelement 13 eine Drehbewegung auf die zentrale Spindel 8 übertragen wird, bewegt sich der stempelartige Endbereich 22 nach oben oder nach unten. Wenn der stempelartige Endbereich 22 sich nach unten bewegt, drückt dieser gegen das Kraftübertragungselement 23, das wiederum gedämpft über die Druckfeder 24 auf den Hülsenboden 21b und hiermit auf das Hülsenelement 21 und die Ventilnadel 20 drückt. Das bedeutet, dass die Ventilnadel 20 in Richtung des Ventilsitzes 34 gedrückt wird.

Ein oberer Bereich (zu der Oberseite 2 hin) des Hülsenelements 21 ist durch eine Buchse 44 verschlossen. Die Buchse 44 ist hohlzylinderförmig ausgebildet und aus einem anderen Material als die Spindel 8 ausgebildet. Insbesondere ist das erste Material, aus dem die Spindel 8 hergestellt ist, härter als das zweite Material, aus dem die Buchse 44 hergestellt ist. So kann eine geringe Reibung zwischen der Spindel 8, also dem stempelartigen Endbereich 22, und der Buchse 44 erreicht werden. Das ist vorteilhaft, damit die Ventilnadel 20 nicht lange in dem Ventilsitz 34 mit dreht.

Ferner bedeutet das, dass bei einer Reibung zwischen dem ersten Material und dem zweiten Material ein gezielter Verschleiß am (weniger harten) zweiten Material stattfindet. Hierdurch lässt sich somit der Verschleiß der Kraftübertragungseinrichtung bzw. der betroffenen Bauteile steuern.

Die Buchse 44, das Hülsenelement 21 mit Ventilnadel 20, und das Kraftübertragungselement 23 drehen so lange mit der gleichen Geschwindigkeit wie die Spindel 8, bis die Ventilnadel 20 in dem Ventilsitz 34 in ihrer axialen Bewegung behindert wird und das vorherrschende Drehmoment kleiner ist als zwischen der Kontaktstelle Buchse 44 zu Spindel 22.

Erst wenn das gebremste Drehmoment (Haftreibmoment) im Ventilsitz 34 groß genug ist, stoppt die Ventilnadel 20. Ab dann findet eine Relativbewegung zwischen Spindel 22 und Buchse 44 findet statt. Diese findet kurz stirnseitig (Buchse 44) und dann nur noch partiell an der inneren Mantelfläche der Buchse 44 statt.

Der Hauptgrund des Nachdrehens der Spindel 8 nachdem die Ventilnadel 20 im Ventilsitz 34 sitzt, liegt darin, ein sicheres Schließen auch noch nach längerer Laufzeit sicherzustellen. So soll auch nach Jahren des Verschleißes ein sicheres Schließen des Ventils gegeben sein. Daher dreht die Spindel 8 mehrere Schritte, beispielsweise 10 Schritte, nach. Dieses Nachdrehen erfordert eine zuverlässige Drehmomententkopplung.

Der Vorteil bei der Verwendung der Buchse 44 liegt insbesondere darin, dass diese gezielt Verschleiß ausgesetzt werden kann und für eine niedrige Reibung zu der Spindel 8 sorgt. So verschleißt weder das Hülsenelement 21 noch die (zentrale) Spindel 8. Dadurch, dass der Kraftübertragungsbereich zwischen dem Kraftübertragungselement 23 und der zentralen Spindel 8 durch die spezielle Form des Kopfbereichs 23a möglichst klein gehalten wird, tritt hier auch keine besonders hohe Reibung auf, so dass das Kraftübertragungselement 23 auch aus dem ersten Material hergestellt werden kann.

Bei dem ersten Material handelt es sich beispielsweise um Edelstahl und bei dem zweiten Material handelt es sich beispielsweise um eine Kupferlegierung, vorzugsweise um Bronze. Die Materialpaarung Bronze und Edelstahl ist besonders vorteilhaft. Dadurch, dass das Hülsenelement 44 in Längserstreckungsrichtung (das heißt entlang der Rotationsachse R) relativ lang ausgebildet ist, ist auch ausreichend Material vorhanden, das von dieser abgetragen werden kann. Besonders vorteilhaft ist das zweite Material Sinterbronze.

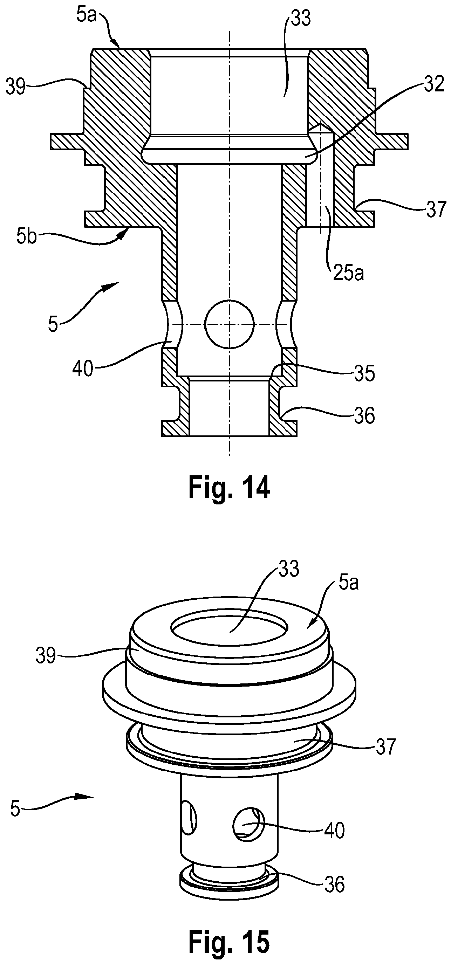

Fig. 14 zeigt einen Längsschnitt des Ventilbasiskörpers 5. Der Ventilbasiskörper 5 weist eine dem Gehäuse 4 zugewandte Seite 5a auf, die eine obere Seite (zu der Oberseite 2 hin) des Ventilbasiskörpers 5 ist. Auf einer entgegengesetzten Seite zu der dem Gehäuse 4 zugewandten Seite 5a weist der Ventilbasiskörper5 eine dem Gehäuse 4 abgewandte Seite 5b auf.

Wie in Fig. 1 zu erkennen, ist angrenzend an diese von dem Gehäuse 4 abgewandte Seite 5b des Ventilbasiskörpers 5 in dem in dem Ventileinbauraum 43 eingebauten Zustand der Fluideingangsraum 27 ausgebildet.

Der Ventilbasiskörper 5 weist ferner einen Aufnahmebereich 33 auf, in dem (in dem zusammengebauten Zustand), wie in Fig. 1 dargestellt, zunächst der Hohlschaft 7 aufgenommen und innerhalb des Hohlschafts 7 das Hülsenelement 21 aufgenommen ist.

In einem unteren Bereich des Aufnahmebereichs 33 ist ein umlaufender Freistich 32 ausgebildet.

Weiter unten im Ventilbasiskörper 5 ist ein Ventilsitz-Aufnahmebereich 35 angeordnet. Dieser Ventilsitz-Aufnahmebereich 35 bietet einen Anschlag für den Ventilsitz 34, wenn dieser von oben in den Ventilbasiskörper 5 geschoben wird. Hierdurch wird ein sicherer und definierter Sitz des Ventilsitzes 34 erreicht.

An einem äußeren unteren Bereich des Ventilbasiskörpers 5 ist ein unterer Dichtungs-Aufnahmebereich 36 ausgebildet. Wie in Fig. 1 zu erkennen, kann in diesen in dem zusammengebauten Zustand ein ringförmiger Dichtungskörper eingesetzt sein. Dieser dichtet den Fluideingangsraum 27 von einem unter dem Expansionsventil 1 angeordneten Bereich des Fluidkanals 46 ab und umgekehrt.

Zurück zu Fig. 14 - dort ist in einem mittleren bis oberen Bereich des Ventilbasiskörpers 5 ein oberer Dichtungs-Aufnahmebereich 37 ausgebildet. Wie in Fig. 1 zu erkennen, ist in diesem oberen Dichtungs-Aufnahmebereich 37 im eingebauten Zustand ebenfalls ein ringförmiges Dichtungselement angeordnet, das insbesondere den Fluideingangsraum 27 von der Außenumgebung abdichtet.

Wie ferner in den Fig. 14 bis 16 zu erkennen, ist an einer Oberseite 2 des Ventilbasiskörpers 5 ein Gehäusesitz 39 angeordnet. Dieser ist insbesondere radial umlaufend an dem oberen Bereich (an der dem Gehäuse 4 zugewandten Seite) des Ventilbasiskörpers 5 so angeordnet, dass dieser das Gehäuse 4 abschließend aufnehmen kann. Wie in Fig. 1 dargestellt, kann ein Schließelement (beispielsweise in Form eines Rings) von außen das Gehäuse 4 radial nach innen gegen den Gehäusesitz 39 drücken.

Innerhalb des Expansionsventils 1 ist eine Vielzahl von Druckausgleichskanälen 25, 26 und 41 ausgebildet. So ist ein erster Druckausgleichskanal 25 angeordnet, der den Gehäuse-Innenraum 28 mit dem Fluideingangsraum 27 verbindet, um zwischen diesen beiden Räumen einen Druckausgleich herzustellen.

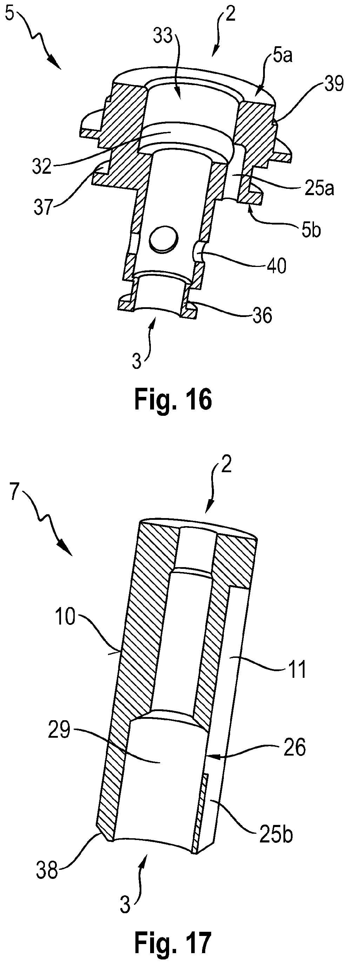

Dieser erste Druckausgleichskanal 25 weist einen ersten Kanalbereich 25a und einen zweiten Kanalbereich 25b auf. Der erste Kanalbereich 25a ist, wie in Fig. 14 und 16 dargestellt, innerhalb des Ventilbasiskörpers 5 ausgebildet. Insbesondere handelt es sich bei dem ersten Kanalbereich 25a um eine Bohrung von der dem Gehäuse 4 abgewandten Seite 5b in den Ventilbasiskörper 5 hinein. Der erste Kanalbereich 25a ist bis zu dem umlaufenden Freistich 32 des Ventilbasiskörpers 5 ausgebildet. Das heißt, dass sich die Bohrung bis zu diesem Freistich 32 erstreckt. Somit schafft der erste Kanalbereich 25a für sich eine Verbindung von der dem Gehäuse 4 abgewandten Seite 5b zu dem Aufnahmebereich 33 des Basiskörpers 5.

Im zusammengebauten Zustand des Expansionsventil 1 ist in diesem Aufnahmebereich 33 der in Fig. 17 dargestellte Hohlschaft 7 aufgenommen. Der Hohlschaft 7 weist den zweiten Kanalbereich 25b auf, der sich in Form der Längsnut 11 von einem unteren Ende hiervon nach oben erstreckt.

Besonders bevorzugt ist das untere Ende des Hohlschafts 7 als umlaufende Fase 38 ausgebildet, so dass sowohl die umlaufende Fase 38 als auch der umlaufende Freistich 32 als Verbindungsbereich zwischen dem ersten Kanalbereich 25a und dem zweiten Kanalbereich 25b dienen.

Allgemein hat ein umfänglich umlaufender Verbindungsbereich insbesondere den Vorteil, dass kein Ausrichten zwischen dem Hohlschaft 7 und dem Ventilbasiskörper 5 erfolgen muss. Prinzipiell würde es jedoch bereits ausreichen, wenn entweder der umlaufende Freistich 32 oder die umlaufende Fase 38 ausgebildet ist. Das Ausbilden beider Elemente führt allerdings zu einem schnelleren Druckausgleich.

Die Längsnut 11 des Hohlschafts 7 hat somit eine doppelte Funktion. Dabei dient sie einerseits dazu, den Gleitring 17 zu führen, und andererseits dazu, als zweiter Kanalbereich 25b einen Druckausgleich zu schaffen. Dies funktioniert insbesondere dadurch, dass die Längsnut 11 zu dem Gehäuseinnenraum 28 hin offen ist. Folglich ist ein Druckausgleich zwischen Fluideingangsraum 27 und Gehäuseinnenraum 28 gegeben.

Ein zweiter Druckausgleichskanal 26 sorgt für einen Druckausgleich zwischen Hohlschaft-Innenraum 29 und Gehäuse-Innenraum 28. Dieser zweite Druckausgleichskanal 26 ist besonders gut in Fig. 17 zu erkennen. In dieser Fig. ist insbesondere zu erkennen, dass der zweite Druckausgleichskanal 26 im Bereich einer maximalen radialen Ausdehnung der Längsnut 11 und des Hohlschaft-Innenraums 29 ausgebildet ist. Dies hat insbesondere den Vorteil, dass bei dem Einbringen der Längsnut 11 in den mit dem Hohlschaft-Innenraum 29 ausgebildeten Hohlschaft 7 auch gleichzeitig der zweite Druckausgleichskanal 26 erzeugt werden kann, ohne dass hierfür ein gesonderter Arbeitsschritt notwendig ist.

Im Prinzip ist der zweite Druckausgleichskanal 26 eine Öffnung am Boden der Längsnut 11. Diese Öffnung ist mit dem Hohlschaft-Innenraum 29 und der Längsnut 11 (und folglich auch mit dem Gehäuse-Innenraum 28 verbunden). Außerdem ist der zweite Druckausgleichskanal 26 bereichsweise von dem zweiten Kanalbereich 25b des ersten Druckausgleichskanals 25 ausgebildet, bzw. die Druckausgleichskanäle verwenden gemeinsame Bereiche.

Das Expansionsventil 1 weist ferner einen dritten Druckausgleichskanal 41 auf. Dieser dritte Druckausgleichskanal 41 ist besonders gut in Fig. 10 zu erkennen und verbindet den unteren Innenbereich 42 des Ventilbasiskörpers 35 mit dem Aufnahmebereich 21a des Hülsenelements 21. Der untere Innenbereich 42 des Ventilbasiskörpers 5 ist ferner über die Fluidbohrungen 40, wie in Fig. 1 zu erkennen, mit dem Fluideingangsraum 27 verbunden.

Sämtliche in Verbindung mit einzelnen Ausführungsformen der Erfindung erläuterten und gezeigten Merkmale können in unterschiedlichen Kombinationen in dem erfindungsgemäßen Gegenstand vorgesehen sein, um gleichzeitig deren vorteilhafte Wirkung zu realisieren. Der Schutzbereich der vorliegenden Erfindung ist durch die Ansprüche gegeben und wird durch die in der Beschreibung erläuterten oder in den Figuren gezeigten Merkmale nicht beschränkt.

Insbesondere sind in der Beschreibung vielfache Einzelaspekte des Expansionsventils 1 beschrieben worden. Dabei sind die Einzelaspekte für sich genommen, getrennt von anderen Aspekten beanspruchbar.

## Patentansprüche

1. Mit einem Schrittmotor betreibbares Expansionsventil (1), das Folgendes aufweist:
ein Gehäuse (4);
einen Hohlschaft (7), welcher in dem Gehäuse (4) angeordnet ist;
einen den Hohlschaft (7) tragenden Ventilbasiskörper (5), welcher das Gehäuse (4) abschließt;
einen Rotor (6), welcher von einem Stator des Schrittmotors antreibbar ist;
eine zentrale Spindel (8), welche innerhalb des Hohlschafts (7) angeordnet und von dem Rotor (6) derart antreibbar ist, dass eine Rotationsbewegung der Spindel (8) über eine Gewindeverbindung (9) in eine axiale Bewegung zum Öffnen und Schließen des Expansionsventils (1) überführbar ist; und
ein Hülsenelement (21), das einen Aufnahmebereich (21a), in dem die zentrale Spindel (8), eine Druckfeder (24) und ein Kraftübertragungselement (23) zumindest bereichsweise aufgenommen sind, und eine Ventilnadel (20) aufweist,
wobei der Aufnahmebereich (21a) des Hülsenelements (21) mittels einer Buchse (44) verschlossen ist,
wobei die Spindel (8) aus einem ersten Material hergestellt ist und die Buchse (44) zumindest bereichsweise aus einem zweiten von dem ersten Material verschiedenen Material hergestellt ist, wobei das zweite Material eine geringere Härte als das erste Material aufweist,
wobei das zweite Material ein Sintermaterial ist.

2. Expansionsventil (1) nach Anspruch 1,
wobei die Buchse (44) ölgetränkt ist.

3. Expansionsventil (1) nach Anspruch 2,
wobei mindestens 15 Volumenprozent, vorzugsweise mindestens 20 Volumenprozent und besonders bevorzugt mindestens 25 Volumenprozent der Buchse (44) Öl aufweisen.

4. Expansionsventil (1) nach einem der vorherigen Ansprüche,
wobei das erste und das zweite Material Metalle oder Metalllegierungen sind.

5. Expansionsventil (1) nach Anspruch 4,
wobei das zweite Material eine Kupferlegierung, vorzugsweise Bronze, ist, und wobei das erste Material ein Stahl, insbesondere ein Edelstahl, ist.

6. Expansionsventil (1) nach einem der vorherigen Ansprüche,
wobei das zweite Material eine Sinterbronze ist.

7. Expansionsventil (1) nach Anspruch 6, wobei die Sinterbronze folgende chemische Zusammensetzung aufweist:
5%-18%, vorzugsweise 9-11% Zinn,
0-3%, vorzugsweise 2% Graphit, und der Rest Kupfer.

8. Expansionsventil (1) nach einem der vorherigen Ansprüche,
wobei das Kraftübertragungselement (23) einen Kopfbereich (23a) und einen Schaftbereich (23b) aufweist, und wobei das Kraftübertragungselement (23) so angeordnet ist, dass ein Kontakt zum Übertragen von Axialkräften von der zentralen Spindel (8) punktuell in einem zentralen Bereich des Kopfbereichs (23a) erfolgt.

9. Expansionsventil (1) nach Anspruch 8,
wobei die Druckfeder (24) bereichsweise auf einer Mantelfläche (23c) des Schaftbereichs (23b) des Kraftübertragungselements (23) angeordnet ist.

10. Expansionsventil (1) nach Anspruch 9,
wobei die Druckfeder (24) eine zylindrische Spiralfeder ist.

11. Expansionsventil (1) nach einem der Ansprüche 8 bis 10,
wobei eine axiale Länge des Schaftbereichs (23b) so lang ausgebildet ist, dass beim Übersteigen einer axialen Kraft, die zu einer Stauchung der Druckfeder (24) um einen vordefinierten Federweg führt, der Schaftbereich (23b) mit einem Hülsenboden (21b) des Hülsenelements (21) in Kontakt kommt.

12. Expansionsventil (1) nach einem der vorherigen Ansprüche,
wobei die Spindel (8) einen stempelartigen Endbereich (22) aufweist, der so ausgebildet und angeordnet ist, dass dieser zum Übertragen von Axialkräften mit dem Kraftübertragungselement (23) in Kontakt kommt, wobei ein oberer Bereich des stempelartigen Endbereichs (22) mit der Buchse (44) in Reibkontakt kommt.

13. Expansionsventil (1) nach Anspruch 12,
wobei der Aufnahmebereich (21a) so ausgebildet ist, dass dieser die Buchse (44), den stempelartigen Endbereich (22), die Druckfeder (24) und das Kraftübertragungselement (23) vollständig aufnimmt.

14. Expansionsventil (1) nach einem der vorherigen Ansprüche,
wobei das Expansionsventil (1) einen Ventilsitz (34) aufweist, und
wobei der Ventilbasiskörper (5) ein einstückig ausgebildeter Körper ist, der den Ventilsitz (34), das Hülsenelement (21) und den Hohlschaft (7) zumindest bereichsweise aufnimmt.

15. Expansionsventil (1) nach Anspruch 14,
wobei der Ventilbasiskörper (5) in einem unteren Bereich einen Ventilsitz-Aufnahmebereich (35) und in einem oberen Bereich einen Aufnahmebereich (33) aufweist, der dazu ausgebildet ist, den Hohlschaft (7) und das Hülsenelement (21) aufzunehmen.

16. Expansionsventil (1) nach Anspruch 15,
wobei das Hülsenelement (21) in dem Aufnahmebereich (33) zumindest bereichsweise innerhalb des Hohlschafts (7) angeordnet ist.

17. Expansionsventil (1) nach einem der vorherigen Ansprüche,
wobei das Kraftübertragungselement (23) derart ausgebildet ist, dass es kein oder nur begrenztes Drehmoment von der zentralen Spindel (8) aufnimmt.

18. Expansionsventil (1) nach einem der vorherigen Ansprüche,
wobei das Expansionsventil (1) eine Spindel-Stopper-Struktur aufweist, die die Rotationsbewegung der Spindel (8) zwischen einer oberen Endlage und einer unteren Endlage eingrenzt.

19. Expansionsventil (1) nach einem der vorherigen Ansprüche,
wobei die Spindel-Stopper-Struktur durch Zusammenwirken eines Spiralkörpers (12) und eines Anschlagkörpers ausgebildet ist.
